# FASCICULE DE BREVET EUROPEEN

(11) **EP 1 147 405 B1**
(45) Date de publication et mention de la délivrance du brevet: **14.06.2006**
(21) Numéro de dépôt: 00900990.3
(22) Date de dépôt: 19.01.2000
(51) Int. Cl.: G01N 21/90, B07C 5/34

(54) **PROCEDE ET DISPOSITIF POUR DETECTER DES GLACURES DANS DES PIECES EN MATIERE TRANSLUCIDE OU TRANSPARENTE**
VERFAHREN UND VORRICHTUNG ZUR ERFASSUNG VON RISSEN IN GEGENSTÄNDEN AUS DURCHSICHTIGEM ODER LICHTDURCHLÄSSIGEM MATERIAL
METHOD AND DEVICE FOR DETECTING CRIZZLING IN TRANSLUCENT OR TRANSPARENT MATERIAL

(30) Priorité: 19.01.1999 WO PCT/BE99/00006
(43) Date de publication de la demande: 24.10.2001
(73) Titulaire: Visiglas Sociéte Anomyme, 1400 Nivelles (BE)
(72) Inventeur: BOTMAN, Etienne, B-7370 Dour (BE); GROSSETETE, Frédéric, B-1090 Jette (BE)
(74) Mandataire: Powis de Tenbossche, Roland
(86) Numéro de dépôt international: PCT/BE2000/000006
(87) Numéro de publication internationale: WO 2000/043757

(56) Documents cités:
- EP-A- 0 388 600
- EP-A- 0 441 012
- EP-A- 0 445 447
- EP-A- 0 497 477
- EP-A- 0 809 099
- WO-A-81/03706
- US-A- 5 214 713
- US-A- 5 717 486

## Description

### Objet de l'invention

La présente invention a pour objet un procédé pour détecter des glaçures dans au moins une partie de pièces réalisées en une matière translucide ou transparente permettant au moins une réflexion partielle d'un ou de rayons lumineux.

### Définitions de termes utilisés dans le présent mémoire

Par glaçures, on entend dans le présent mémoire des fissures présentes dans la matière même d'un objet, lesdites glaçures pouvant être traversantes, c'est-à-dire pouvant se propager sur toute l'épaisseur de la paroi de la pièce. Les glaçures se retrouvent dans la bague, dans le corps, dans les épaules et/ou dans le fond de la pièce. Les glaçures sont généralement soit sensiblement verticales (c'est-à-dire sensiblement parallèles à un axe de symétrie ou à un axe central de la pièce), soit sensiblement horizontales (c'est-à-dire s'étendant dans un plan sensiblement perpendiculaire audit axe de symétrie ou axe central de la pièce). Les glarures sont des amorces pour la propagation de fissures pouvant conduire à la destruction de l'objet, par exemple lors d'un choc mécanique ou thermique.

Par rayons ou faisceaux lumineux, on entend dans le présent mémoire essentiellement les rayons ou faisceaux lumineux visibles ou non, c'est-à-dire les rayons lumineux de couleur particulière (rouge, bleue, jaune, etc.) ou blancs, les rayons UV, les rayons IR (infra rouge).

Par image linéaire ou sensiblement linéaire, on entend dans le présent mémoire une image à une dimension composée d'un ensemble d'éléments adjacents ou points d'image (pixels). L'image linéaire ou sensiblement linéaire peut être droite ou sensiblement droite, courbe, en forme de ligne brisée, en forme de ligne continue, en forme de ligne discontinue, en forme de traits interrompus, en forme de ligne en zig-zag, en forme de créneau, etc., voire l'aspect d'une série de points ou groupes de points discrets, groupes de points adjacents ou non entre eux (éventuellement distants l'un de l'autre).

Par image matricielle ou sensiblement matricielle, on entend dans le présent mémoire une image à deux dimensions composée d'un ensemble d'éléments adjacents ou sensiblement adjacents ou points d'image (pixels).

Par image développée, on entend dans le présent mémoire une succession d'images linéaires ou sensiblement linéaires ou matricielles ou sensiblement matricielles décalées dans le temps, prises lors du mouvement relatif de la pièce à examiner par rapport aux têtes de prise d'image.

Par tête de prise d'image, on entend :
- une extrémité d'un endoscope de prise d'image, avantageusement munie d'une lentille d'acquisition d'image (l'image étant ainsi transmise, via des fibres optiques à transfert d'images, à un capteur de prise d'image, sur lequel est regroupé un ensemble de fibres endoscopiques), ou
- un capteur d'image matricielle ou sensiblement matricielle ou linéaire ou sensiblement linnéaire, appelé dans le présent mémoire « camera board », avec éventuellement son objectif ou sa lentille de prise d'image, composé avantageusement d'une caméra-carte (carte électronique) appelée aussi « board camera » ou « board level camera », ou encre de micro-cameras, avec ou sans objectif intégré, ou encore de « cameras à tête déportée » ou encore de « micro-head camera », avantageusement déportée par rapport à un centralisateur chargé avantageusement de la centralisation des signaux de synchronisation et/ou des images acquises.

### Etat de la technique

On connaît par le document WO 81/ 03706 un procédé et un dispositif pour détecter des glaçures. Dans ce procédé connu, on émet des rayons lumineux au moyen d'émetteurs sur un corps transparent à analyser mis en rotation et on capte des rayons réfractés ou réfléchis sur ce corps au moyen de blocs détecteurs comportant chacun une zone de détection. Pour éviter des problèmes de bruit dus à des réflexions lumineuses parasites, un système électronique est utilisé pour pulser l'émission des rayons lumineux de manière synchronisé avec l'activité des capteurs lumineux, utilise des capteurs détectant un rayonnement pour détecter la présence de glaçures.

On a déjà pensé pour détecter des glaçures d'éclairer une pièce en rotation au moyen d'une série de faisceaux lumineux et de mesurer une intensité lumineuse au moyen d'un photocapteur (tel qu'une photodiode ou un phototransistor). Dans cette méthode, on détermine l'intensité des faisceaux réfléchis et on considère que lorsque l'intensité des faisceaux réfléchis dépasse un seuil déterminé, la pièce contrôlée présente au moins un défaut. Primo, cette méthode présente des lacunes, car elle ne permet pas de faire une distinction entre des signaux provenant d'une glaçure et ceux provenant de signaux parasites. Selon cette méthode, une pièce sera considérée comme défectueuse et à rejeter dès qu'un seuil d'intensité est atteint, ceci aussi bien de par la présence d'un défaut réel que d'une réflexion parasite. Cette méthode entraîne donc le rejet de pièces ne présentant pas de défauts et rend son réglage sensible. Secundo, cette méthode qui utilise un photocapteur par champ de vue est incapable de détecter un défaut représentant moins de 1 % du champ de vue. Tertio, pour contrer le problème décrit au secundo, il a été proposé d'utiliser de petits faisceaux lumineux. Toutefois, l'utilisation de tels faisceaux lumineux présente l'inconvénient de devoir procéder en cours de production à de nombreuses corrections du réglage des faisceaux lumineux et des angles de prises de vue, en fonction des variations d'orientation et de position des glaçures accidentelles dans les pièces, qui apparaissent lors de la production.

Pour remédier à ces inconvénients, on a pensé pour la détection de glaçures d'éclairer une pièce statique sans mouvement relatif entre le système de détection et la pièce à contrôler (statique par rapport à un temps d'intégration extrêmement court) au moyen d'une série de sources lumineuses et de prendre une série d'images planes (projections dans un plan image d'une partie de la pièce) de la pièce définies chacune par une série de points d'image ou pixels. Après avoir défini des images témoins ou masques à l'aide d'échantillons, on compare les images planes de la pièce avec les images témoins pour détenniner des différences de niveau de gris entre les images de la pièce et les images témoins, différences dues à une ou plusieurs réflexions de lumière sur une glaçure. Pour obtenir un contrôle correct de la pièce, il est indispensable de prendre un nombre important d'images de la pièce (20 à 60, voire plus) au moyen d'appareils de prise d'image distincts (des images doivent être prises à divers endroits de la pièce, sous divers angles de prise de vue) et d'utiliser un nombre important de faisceaux ou émetteurs lumineux. La détection d'un type de défaut particulier, par exemple dans la bague, nécessite de prendre des images de la bague selon divers angles de vue spécifiques par rapport à la bague, images qui doivent se chevaucher suffisamment pour assurer un contrôle de la présence ou non dudit défaut sur tout le pourtour de la bague, et ce quelle que soit la position de la pièce, de la bague et du défaut. Un chevauchement non suffisant des images accroît le risque de ne pas détecter des glaçures sur les bords des images.

La présente invention vise un procédé de contrôle efficace de pièces pouvant présenter des glaçures au moyen d'un nombre limité de têtes de prise d'image distinctes et d'un nombre limité de rayons et/ou faisceaux lumineux par rapport au procédé décrit ci-avant.

On connaît également divers procédés de détection de défauts de surface, tels qu'ébréchures, défauts de finition, etc.

On connaît ainsi par le document EP 0 388 600 un appareil pour le contrôle du fini de la surface de fermeture (surface extrême du goulot), pour détecter la présence de défauts pouvant affecter la fermeture, c'est-à-dire des bourrelets ou des crevasses. Ce document n'enseigne pas un appareil de détection de glaçures ou de fissures qui sont présentes dans la matière même de l'objet à examiner, lesdites glaçures ou fissures étant des amorces pour la propagation de fissures pouvant conduire à la destruction de l'objet, par exemple lors d'un choc mécanique ou thermique. De plus, le document EP 0 388 600 utilise une source de lumière stromboscopique et la caméra n'est associée qu'à une tête de prise de vue. Une détermination correcte des glaçures présentes dans la matière même, en particulier dans la matière du goulot d'une bouteille, nécessite un nombre important de têtes de prise de vue.

Le document EP 0 445 447 enseigne un appareil pour déterminer la position d'étiquettes sur un support, c'est-à-dire un appareil apte à détecter des défauts de forme tridimensionnelle. Ce document n'enseigne aucune méthode pour détecter des glaçures dans la matière de la bouteille.

Le document EP 0 497 477 enseigne un appareil pour mesurer les défauts de l'extrémité d'un objet. Cet appareil permet de déterminer une différence de hauteur dans ladite extrémité, mais n'est pas apte à détecter des glaçures dans la matière du produit.

Ces documents n'enseignent donc pas un procédé de détection de glaçures.

### Description de l'invention

### Procédé suivant l'invention

Le procédé selon l'invention, comme défini dans la revendication 1, est un procédé pour détecter des glaçures dans au moins une partie de pièces en une matière translucide ou transparente permettant au moins une réflexion partielle d'un ou de rayons lumineux. Dans ce procédé, on crée un mouvement relatif entre la pièce et des têtes de prises de vue, tandis que lors d'au moins une partie du mouvement relatif entre la pièce et des têtes de prise de vue, pour des parties de la pièce illuminée, on prend, de manière décalée dans le temps, au moyen de têtes de prise de vue reliées par un dispositif de transfert de signaux à un dispositif de traitement d'images, plusieurs images linéaires ou sensiblement linéaires ou matricielles ou sensiblement matricielles distinctes et formées d'au moins 25 points d'image ou pixels, de manière à obtenir, éventuellement après traitement d'une ou d'images prises, une série d'images développées correspondant chacune au développement des points d'images ou pixels d'au moins 25 images linéaires ou sensiblement linéaires décalées dans le temps de la pièce en mouvement relatif ou d'au moins une série d'au moins quatre images matricielles ou sensiblement matricielles décalées dans le temps. On traite ensuite la série d'images développées ou au moins une partie de celles-ci pour mettre en évidence une ou des glaçures.

### Exemple de capacité de détection

Dans le procédé suivant l'invention, l'illumination de la pièce ou partie de pièce, la série d'images développées ou au moins une partie de celles-ci et le traitement des images développées ou d'une partie de celles-ci sont adaptés pour détecter une ou des glaçures obliques, horizontales ou verticales, en particulier verticales ou sensiblement verticales, de surface inférieure à 1mm², en particulier inférieure à 0,5mm², de préférence inférieure à 0,2mm², de façon plus particulière inférieure à 0,15mm².

Pour la détection de glaçures verticales ou sensiblement verticales, il est utile d'éclairer la pièce au moyen de faisceaux lumineux traversant la matière de la pièce depuis sa face extérieure jusque dans sa face intérieure, ou inversement. En particulier, pour la détection de glaçures au niveau de la matière du goulot d'une pièce, plusieurs faisceaux lumineux sont dirigés sur la face latérale extérieure du goulot (face s'étendant entre le bord extrême du goulot et le corps de la pièce) de la pièce selon des angles d'attaque différents.

Dans le procédé suivant l'invention, on utilise donc plusieurs têtes de prise d'images. Chaque tête de prise d'image correspond avantageusement à l'extrémité d'un bras d'un endoscope relié à une caméra linéaire ou matricielle, ou à un capteur d'image électronique, avantageusement déporté par rapport à un centralisateur, ledit capteur étant relié audit centralisateur par un dispositif de transfert de signaux, par exemple digitaux ou analogiques.

De façon avantageuse, on traite ladite série d'images développées pour associer à chaque point d'image de celles-ci un niveau de gris ou de couleur et pour comparer le niveau de gris ou de couleur de chaque point d'image au niveau de gris ou de couleur d'un point d'image d'une ou d'images de référence et/ou au niveau de gris
ou de couleur d'un ou d'autres points d'image d'une image développée, de manière à déterminer une différence de niveau de gris ou de couleur correspondant à la présence d'une glaçure dans les parties de la pièce prises en image.

Selon une forme de réalisation avantageuse du procédé suivant l'invention, on prend une série d'images développées par exemple au moyen d'un ou de plusieurs capteurs linéaires ou sensiblement linéaires ou matricielles ou sensiblement matricielles, reliés par un endoscope à plusieurs têtes de prise d'image.

Par image développée, on entend la succession des images, avantageusement linéaires, prises par une tête de prise d'image, de manière décalée dans le temps, au cours du mouvement relatif de la pièce.

Un avantage important de l'utilisation d'images développées est que seul un nombre réduit de sources lumineuses et de têtes de prises d'images, avantageusement linéaires ou matricielles, doivent être agencées de manière adéquate par rapport à la pièce en mouvement relatif. Un autre avantage important de l'utilisation d'images développées est que l'image, avantageusement linéaire ou sensiblement linéaire ou matricielle ou sensiblement matricielle, d'une partie de la pièce en mouvement relatif a toujours lieu selon le même angle de prise d'image.

D'autres avantages que présente le procédé selon l'invention ou des variantes de celui-ci sont :
- coût réduit;
- complexité de réalisation moindre;
- encombrement moindre;
- densité d'intégration plus faible;
- traitement possible d'une partie de l'image développée par rapport à une autre partie de l'image développée;
- possibilité d'avoir des images moins perturbées et donc facilité et fiabilité de traitement;
- possibilité d'un contrôle multiple et redondant de la présence d'une glaçure;
- possibilité de détecter des glaçures dans des zones sensiblement perturbées;
- meilleure répétition de détection de glaçures que dans un système statique (pas de mouvement relatif entre la pièce et les têtes de prise de vue);
- possibilité d'une détection plus rapide d'un positionnement non optimal d'un émetteur lumineux ou d'une tête de prise d'image linéaire ou sensiblement linéaire (présence d'une glaçure continue ou sensiblement continue);
- augmentation de la résolution des images acquises, ladite résolution pouvant aller jusqu'à 1000x1000 pixels, voire bien plus encore;
- possibilité d'avoir un traitement digital des images;
- possibilité de comparer des images provenant de deux têtes de prise d'image différentes;
- utilisation d'une ou de caméras ou capteurs, chacun étant relié à plusieurs têtes de vue distinctes par un endoscope ou utilisation de plusieurs capteurs électroniques reliés à un centralisateur d'images ;
- amélioration des images acquises au moyen de camera board ;
- etc.
   Selon une variante d'un procédé suivant l'invention, pour au moins une partie de la série d'images développées, on compare le niveau de gris ou de couleur de points d'image d'une image développée, de façon avantageuse de chaque point d'image d'une image développée, au niveau de gris ou de couleur d'un ou d'autres points d'images de ladite image développée et/ou au niveau de gris ou de couleur d'un ou d'autres points d'images d'une autre image développée, éventuellement après traitement.
   Selon un détail d'une forme de réalisation du procédé, pour des parties de la pièce en mouvement relatif, on prend au moyen de têtes de prise de vue, plusieurs images linéaires ou sensiblement linéaires ou matricielles ou sensiblement matricielles, redondantes et formées d'au moins 25 points d'image ou pixels, de manière à obtenir, éventuellement après traitement, une série d'images développées redondantes correspondant à au moins deux images développées correspondant chacune pour une même partie de la pièce en mouvement relatif par rapport aux dites têtes de prise de vue, au développement des points d'images ou pixels d'une image linéaire ou sensiblement linéaire ou matricielle ou sensiblement matricielle éventuellement traitée. Etant donné que la glaçure détectée dans une image développée d'une partie de la pièce devrait être détectée ou détectable dans une image développée redondante de ladite partie de la pièce, ce procédé permet de contrôler la fiabilité de la détection d'une glaçure.
   Selon une forme de réalisation particulière du procédé suivant l'invention,
- on illumine une partie de la pièce au moyen d'un premier rayon ou faisceau lumineux et au moyen d'un deuxième rayon ou faisceau,
- on génère un mouvement relatif entre la pièce et lesdits premier et deuxième rayon ou faisceau lumineux,
- lors du mouvement relatif et de manière successive et décalée dans le temps, on prend pour ladite partie de la pièce illuminée, au moins deux images linéaires ou sensiblement linéaires ou matricielles ou sensiblement matricielles formées chacune d'au moins 25 points d'image ou pixels, de manière à obtenir, éventuellement après traitement, (a) une première image développée correspondant au développement des points d'image ou pixels d'une première image linéaire ou sensiblement linéaire ou matricielle ou sensiblement matricielle éventuellement traitée et (b) une deuxième image développée correspondant au développement des points d'image ou pixel d'une deuxième image linéaire ou sensiblement linéaire ou matricielle ou sensiblement matricielle éventuellement traitée.
Bien que les rayons ou faisceaux peuvent éclairer des parties distinctes de la pièce, en général les rayons ou faisceaux éclaireront sensiblement une même zone de la pièce, mais selon des angles différents. Les rayons peuvent être de nature identique ou non (par exemple même longueur d'onde, longueur d'onde différente, densité d'illumination identique ou non, etc.).

Selon un détail particulier d'un procédé suivant l'invention,
- on illumine la pièce au moyen d'un premier rayon ou faisceau lumineux et au moyen d'un deuxième rayon ou faisceau,
- on génère un mouvement relatif entre la pièce et lesdits premier et deuxième rayon ou faisceau lumineux, de manière à ce qu'une partie de la pièce soit illuminée de manière successive et distincte, respectivement au moyen du premier rayon ou faisceau, et au moyen du deuxième rayon ou faisceau,
- lors du mouvement relatif et de manière successive et décalée dans le temps, on prend, pour la partie de la pièce en un endroit illuminé par le premier rayon ou faisceau, au moins une première image linéaire ou sensiblement linéaire ou matricielle ou sensiblement matricielle, et pour la partie de la pièce en un endroit illuminé par le deuxième rayon ou faisceau, au moins une deuxième image linéaire ou sensiblement linéaire ou matricielle ou sensiblement matricielle, de manière à obtenir, éventuellement après traitement, une première image développée correspondant au développement des points d'image ou pixels d'une première image linéaire ou sensiblement linéaire ou matricielle ou sensiblement matricielle éventuellement traitée de ladite partie illuminée par le premier rayon ou faisceau et une deuxième image développée correspondant au développement des points d'image ou pixel d'une deuxième image linéaire ou sensiblement linéaire ou matricielle ou sensiblement matricielle éventuellement traitée de ladite partie illuminée par le deuxième rayon ou faisceau.

Ce procédé permet d'avoir des images développées d'une même partie de la pièce par exemple pour des rayons ou faisceaux de nature différente (longueur d'onde différente) mais ayant par rapport à la pièce un même angle d'illumination. Ceci permet le cas échéant une classification du type de glaçures (glaçure détectée lors de la réflexion de tel rayon et pas de tel autre rayon). Dans ce procédé, puisque seules deux images (linéaires ou sensiblement linéaires ou matricielles ou sensiblement matricielles) locales sont prises et que seules deux parties locales de la pièce sont illuminées, le risque d'une interférence des rayons ou faisceaux lumineux peut être réduit à zéro sans problème majeur de placement des émetteurs lumineux ou d'encombrement.

Pour éviter des problèmes d'interférences lumineuses, le procédé suivant l'invention peut utiliser des rayons ou faisceaux lumineux de longueurs d'onde différentes et ne s'influençant pas mutuellement.

Bien que les angles de prise de vue des têtes de prise de vue sont en général choisis ou déterminés en fonction du type de glaçure, de l'orientation de celle-ci, de l'orientation du rayon ou faisceau lumineux, selon une forme de réalisation possible du procédé suivant l'invention, on prend pour une partie de la pièce illuminée en mouvement relatif par rapport à des têtes de prise de vue, au moins une première image linéaire ou sensiblement linéaire correspondant à au moins une partie de l'intersection d'un premier plan avec la pièce et au moins une deuxième image linéaire ou sensiblement linéaire correspondant à au moins une partie de l'intersection d'un deuxième plan avec la pièce, lesdits premier et deuxième plans étant sécants entre eux. Selon une variante possible, on prend pour une partie de la pièce illuminée en mouvement relatif au moins une image matricielle ou sensiblement matricielle correspondant sensiblement à deux images linéaires sécantes.
Ceci permet d'assurer la détection d'une glaçure, même si l'orientation ou l'inclinaison de la glaçure varie. De façon avantageuse, la partie de l'intersection du premier plan avec la pièce et la partie de l'intersection du deuxième plan avec la pièce se coupent entre elles. Ceci permet que de manière instantanée, un même point de la pièce soit vue sous deux angles différents.

Dans le procédé suivant l'invention, le mouvement relatif entre la pièce et les têtes de prise de vue est avantageusement un mouvement de rotation ou un mouvement de translation ou une combinaison d'un mouvement de rotation et d'un mouvement de translation. De façon avantageuse, le mouvement relatif est un mouvement relatif de rotation ou comporte au moins une composante constituée par un mouvement de rotation. En tant que mouvement de rotation, on entend par exemple la rotation de la pièce par rapport à des têtes de prise de vue fixes, la rotation d'un support par rapport à une pièce non mise en rotation, voire même la mise en rotation de la pièce simultanément avec la mise en rotation du support, cette dernière étant alors différente de celle de la pièce. Le mouvement de rotation est par exemple un mouvement de rotation relatif par rapport à un axe de symétrie ou à un axe central de la pièce. La rotation est par exemple une rotation sur 45° voire plus, par exemple sur 60° ou plus, sur 90° ou plus, sur 180°, sur 360° ou un tour de la pièce par rapport aux têtes de prise de vue, ou sur plus de 360°, par exemple sur 1,2;1,5;2;2,5;2,7; 3;4 tours, voire plus de 4 tours. Le mouvement de rotation peut être un mouvement de rotation dans le sens horlogique ou dans le sens anti horlogique ou une combinaison d'un mouvement de rotation dans le sens horlogique et dans le sens anti horlogique. Un mouvement relatif de rotation comprenant un premier mouvement horlogique et un deuxième mouvement anti horlogique permet de prendre des vues redondantes (inversées) de la pièce par les têtes de prise de vue.
Les têtes de prise de vue peuvent également subir un mouvement de rotation ou de pivotement par rapport à la pièce en mouvement relatif, par exemple de rotation par rapport à un axe. Dans ce cas, il peut être avantageux que les têtes de prise de vue subissent un mouvement de rotation par rapport à un axe distinct et non parallèle de l'axe de rotation de la pièce, de manière à examiner une pièce sous plusieurs angles de prise de vue.
Dans le cas du contrôle de pièces présentant une irrégularité ou protubérance de surface sensiblement hélicoïdale, telle qu'un filet, on prend avantageusement plusieurs images linéaires ou sensiblement linéaires de la partie de pièce présentant ladite irrégularité, chaque image linéaire ou sensiblement linéaire correspondant à l'intersection d'un plan avec la partie de pièce vue dans ledit plan, chaque plan desdites images, éventuellement après rotation autour de l'axe de rotation de la pièce, correspondant à un autre plan d'une image ou étant parallèle à un autre plan d'une image. Par exemple, chaque image linéaire ou sensiblement linéaire de ladite partie correspond à l'image de l'irrégularité hélicoïdale sur une hauteur égale ou inférieure au pas de l'hélice de l'irrégularité hélicoïdale.

Dans le cas du contrôle du corps de la pièce creuse définissant un volume intérieur et présentant une ouverture vers ledit volume intérieur ou de la partie de la pièce creuse située entre le goulot ou bague et le fond, on soumet avantageusement la pièce à un éclairage diffus. Un tel éclairage diffus est avantageusement un éclairage diffus de la pièce par le fond de celle-ci, un éclairage diffus de la bouteille par son ouverture vers le volume intérieur, et/ou un éclairage diffus obtenu par un arrière-plan émettant ou diffusant un rayonnement diffus. Pour le contrôle de l'absence de glaçures dans la bague ou dans le fond ou dans les épaules, endroit où la probabilité de retrouver des glaçures est maximale, on soumet avantageusement des parties de la bague ou du fond à un éclairage discret ou local pour assurer une détection optimale des glaçures, même si ces dernières sont très petites.

Selon un détail d'une forme de réalisation, on prend des images linéaires ou sensiblement linéaires ou matricielles ou sensiblement matricielles d'une partie illuminée de la pièce en rotation avec un arrière plan ou des rayons ou faisceaux lumineux incidents, et on modifie la couleur de l'arrière plan ou rayons ou faisceaux incidents de sorte qu'au moins sur un premier tour de rotation de la pièce, on prend des images linéaires ou sensiblement linéaires ou matricielles ou sensiblement matricielles de la pièce avec un arrière plan ou rayons ou faisceaux incidents d'une première couleur et qu'au moins sur un autre tour de rotation de la pièce, on prend des images linéaires ou sensiblement linéaires ou matricielles ou sensiblement matricielles de la pièce avec un arrière plan ou rayons ou faisceaux incidents d'une couleur différente de la première.

Selon un autre détail d'une forme de réalisation, on prend des images linéaires ou sensiblement linéaires ou matricielles ou sensiblement matricielles d'une partie d'une pièce éclairée dans un premier temps au moyen d'une illumination d'une première couleur, et dans un deuxième temps au moyen d'une illumination d'une couleur différente de la première.

Selon une variante du procédé suivant l'invention, on illumine simultanément une même partie de la pièce au moyen de deux rayons ou faisceaux de couleur, et on découple les couleurs au niveau des têtes de prise de vue par filtration (au moyen de filtres).

Dans le procédé suivant l'invention, on prend avantageusement plus de trois, de façon avantageuse plus de 5, en particulier plus de 10, de préférence plus de 20 images linéaires ou sensiblement linéaires ou matricielles ou sensiblement matricielles distinctes formées chacune d'au moins 50, de préférence d'au moins 80 points d'image ou pixels.
Selon une particularité avantageuse du procédé suivant l'invention, le procédé utilisant les têtes endoscopiques acquiert ces images distinctes grâce à un nombre élevé de têtes de prise d'image et à un nombre réduit de caméras ou de capteurs (linéaires ou matricielles), par exemple 1 ou 2 ou un nombre quelconque, mais avantageusement inférieur ou égal à 5. Ceci est rendu possible grâce à l'utilisation d'endoscope permettant de relier une caméra à plusieurs têtes de prise de vue. La ou les caméras ou le ou les capteurs sont reliés au dispositif de traitement des images ou constituent le dispositif de traitement des images.
Selon une autre particularité avantageuse du procédé suivant l'invention, le procédé acquiert une série d'images distinctes par une série de têtes de prise d'image électronique, en particulier du type « camera board », qui sont reliées par un dispositif de transfert de signaux à un centralisateur, en particulier un centralisateur générateur de signaux de synchronisation, ce dernier étant relié au dispositif de traitement d'image.

Avantageusement, on éclaire la pièce ou une ou des parties de celle-ci au moyen d'une série de têtes d'éclairage, par exemple de plus de 10, voire de plus de 50 têtes d'éclairage permettant chacune une illumination locale de la pièce. Les faisceaux lumineux sont avantageusement dirigés sur une paroi de la pièce à contrôler selon une direction traversant la matière de la pièce depuis sa face extérieure vers sa face intérieure, ou inversement. En particulier, pour la détection de glaçures au niveau de la matière du goulot d'une pièce, plusieurs faisceaux lumineux sont avantageusement dirigés sur la face latérale extérieure du goulot (face s'étendant entre le bord extrême du goulot et le corps de la pièce) de la pièce selon des angles d'attaque différents.

### Dispositif suivant l'invention

L'invention a encore pour objet un dispositif pour la mise en oeuvre d'un procédé suivant l'invention. En particulier, le dispositif suivant l'invention, comme défini dans la revendication 18, est adapté ou agencé pour un appareil comportant un châssis, un moyen destiné à porter une pièce et un moyen pour créer un mouvement relatif de la pièce par rapport à au moins une partie du châssis, ledit dispositif comprenant au moins:
- un moyen pour illuminer la pièce en mouvement relatif ou une partie de celle-ci au moyen d'au moins un rayon lumineux, de façon avantageuse d'au moins 5 faisceau lumineux distincts;
- plusieurs têtes de prise de vue pour prendre plusieurs images linéaires ou sensiblement linéaires ou matricielles ou sensiblement matricielles distinctes d'une ou de parties de la pièce en mouvement relatif illuminée,
- un moyen de traitement des images provenant des têtes de prise de vue via un dispositif de transfert de signal, pour obtenir, éventuellement après traitement desdites images linéaires ou sensiblement linéaires ou matricielles ou sensiblement matricielles, une série d'images développées correspondant chacune au développement, lors d'au moins une partie du mouvement relatif entre la pièce et des têtes de prise de vue, des points d'images ou pixels d'images décalées dans le temps, et
- un moyen de traitement de la série d'images développées ou au moins d'une partie de celles-ci pour mettre en évidence une ou des glaçures, dans lequel le moyen pour illuminer la pièce, les têtes de prise d'image et le ou les moyens de traitement sont agencés et adaptés pour détecter des glaçures d'une surface inférieure à 1mm², avantageusement inférieure à 0,5mm², de préférence inférieure à 0,2mm².

Selon une forme de réalisation, le dispositif comprend :
- un moyen pour illuminer la pièce en mouvement relatif ou une partie de celle-ci au moyen d'au moins un rayon lumineux, de façon avantageuse d'au moins 5 faisceau lumineux distincts;
- un endoscope relié à plusieurs têtes de prise de vue pour prendre plusieurs images distinctes d'une ou de parties de la pièce en mouvement relatif illuminée,
- éventuellement un moyen de traitement des images provenant des têtes de prise de vue via l'endoscope,
- une caméra ou capteur ou caméra à adressage de pixels ou à lecture aléatoire de pixels, recevant les images éventuellement traitées, de manière à obtenir, éventuellement après traitement desdites images linéaires ou sensiblement linéaires ou matricielles ou sensiblement matricielles, une série d'images développées correspondant chacune au développement, lors d'au moins une partie du mouvement relatif entre la pièce et des têtes de prise de vue, des points d'images ou pixels d'images décalées dans le temps, éventuellement traitées d'une partie de la pièce,
- un moyen de traitement, faisant éventuellement partie de la caméra ou du capteur, de la série d'images développées ou au moins d'une partie de celles-ci pour associer, éventuellement après traitement, à chaque point d'image de celles-ci ou partie de celles-ci un niveau de gris ou de couleur et pour comparer le niveau de gris ou de couleur de chaque point d'image au niveau de gris ou de couleur d'un point d'image d'une ou d'images de référence et/ou au niveau de gris ou de couleur d'un ou d'autres points d'image d'une image développée, de manière à déterminer une différence de niveau de gris ou de couleur correspondant à la présence d'une glaçure dans les parties de la pièce prises en image.

Selon une autre forme de réalisation, le dispositif comprend :
- un moyen pour illuminer la pièce en mouvement relatif ou une partie de celle-ci au moyen d'au moins un rayon lumineux, de façon avantageuse d'au moins 5 faisceau lumineux distincts;
- une série de capteurs électroniques de prise d'images ou de « camera board » ou de cartes électroniques de prises de vue pour prendre plusieurs images distinctes d'une ou de parties de la pièce en mouvement relatif illuminée,
- éventuellement un centralisateur recevant les images des capteurs électroniques ou caméra board ou cartes électroniques, via un dispositif de transfert de signal,
- un moyen de traitement recevant les images des cartes électroniques ou des caméra board ou des capteurs électroniques de prise d'image ou du centralisateur via un dispositif de transfert de signaux analogiques ou digitaux, le dispositif traitant les images de manière à obtenir une série d'images développées correspondant chacune au développement, lors d'au moins une partie du mouvement relatif entre la pièce et des têtes de prise de vue, des points d'images ou pixels d'images décalées dans le temps, éventuellement traitées d'une partie de la pièce, ledit moyen de traitement associant, à chaque point d'image des images développées ou d'une partie de celles-ci un niveau de gris ou de couleur et pour comparer le niveau de gris ou de couleur de chaque point d'image au niveau de gris ou de couleur d'un point d'image d'une ou d'images de référence et/ou au niveau de gris ou de couleur d'un ou d'autres points d'image d'une image développée, de manière à déterminer une différence de niveau de gris ou de couleur correspondant à la présence d'une glaçure dans les parties de la pièce prises en image.

De façon avantageuse, au moins pour une partie d'une image développée, le moyen de traitement du dispositif suivant l'invention compare le niveau de gris ou de couleur de points d'image de ladite image développée au niveau de gris ou de couleur d'un ou d'autres points d'images de ladite image développée ou d'une autre image développée, éventuellement après traitement.

Selon une caractéristique d'un dispositif suivant l'invention, il comporte deux (voire plus de deux) têtes d'illuminations distinctes et différentes émettant chacune un rayon ou faisceau lumineux ou deux séries de têtes d'illumination, lesdites têtes étant agencées de manière à ce qu'une partie de la pièce soit illuminée successivement par le rayon ou faisceau lumineux provenant de la première tête ou de têtes de la première série et par le rayon ou faisceau provenant de la deuxième tête ou de têtes de la deuxième série. Les têtes de prise de vue sont agencées quant à elles pour prendre une ou des images de ladite partie de la pièce en un endroit illuminé par la première tête et une ou des images de la pièce en un endroit illuminé par la deuxième tête d'illumination.

Selon une caractéristique d'un dispositif suivant l'invention, il comporte un arrière plan pour la pièce dont on prend des images, avantageusement linéaires ou sensiblement linéaires, ledit arrière plan étant associé à un moyen pour modifier la couleur de celui-ci et/ou des rayons ou faisceaux projetés sur celui-ci par un ou des émetteurs lumineux.

Selon un détail d'une forme de réalisation, le dispositif comporte un moyen pour modifier la couleur de l'illumination des têtes d'illumination. Un tel moyen est par exemple un ou plusieurs filtres placés sur la ou les têtes d'illumination, un moyen associé à plusieurs sources ou générateurs de lumières ou lampes de tout type, par exemple lampes halogènes, lampe à vapeur de métal, lampe à décharge, laser, etc., émettant des rayons lumineux de couleur différente ou de longueurs d'onde différentes, ou un ou plusieurs filtres, de sorte que pour un ou plusieurs mouvements relatifs de la pièce, une partie de mouvement relatif, une partie de la pièce est illuminée au moyen de rayons d'une première couleur ou d'une première longueur d'onde, tandis que pour une autre partie du mouvement relatif, ladite partie de la pièce est illuminée au moyen de rayons d'une couleur ou d'une longueur d'onde différente de la première.

Il est clair que le dispositif suivant l'invention comporte avantageusement des moyens pour régler ou adapter la position et l'orientation des têtes de prise de vue et des têtes des sources lumineuses.
Pour la détection de glaçures verticales ou sensiblement verticales, il est utile de régler les faisceaux lumineux selon des directions traversant la matière de la pièce depuis sa face extérieure jusque dans sa face intérieure, ou inversement. En particulier, pour la détection de glaçures au niveau de la matière du goulot d'une pièce, plusieurs faisceaux lumineux sont dirigés sur la face latérale extérieure du goulot (face s'étendant entre le bord extrême du goulot et le corps de la pièce) de la pièce selon des angles d'attaque différents.

Selon une forme de réalisation particulière du dispositif suivant l'invention, il comporte un moyen pour identifier les ou des glaçures (par exemple par comparaison avec des images de référence), pour les classifier (par exemple selon leur type, glaçure verticale, glaçure horizontale, etc., selon leur grandeur, selon leur importance, etc.) et pour les localiser sur les pièces (position dans la bague, dans les épaules, dans le corps (partie basse, partie supérieure, partie centrale), dans le fond).
Selon une variante possible, dès que la présence d'une glaçure est détectée, on arrête la détection d'autres glaçures éventuelles.

### Brève Description des Dessins

Des particularités et détails de l'invention ressortiront de la description détaillée suivante, dans laquelle il est fait référence aux dessins ci-annexés.

Dans ces dessins,
La figure 1 est une vue schématique d'un dispositif suivant l'invention,
La figure 2 est une vue de côté du dispositif de la figure 1,
La figure 3 est une vue d'un détail, en perpective, du dispositif de la figure 1,

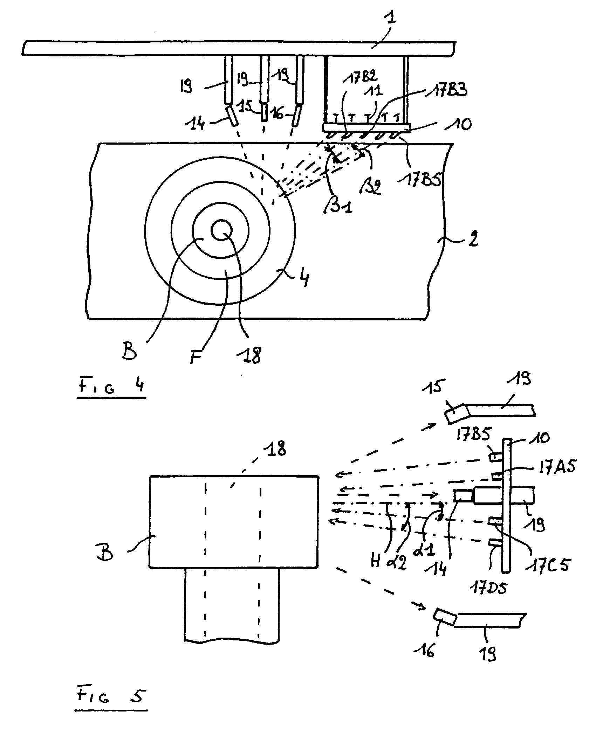

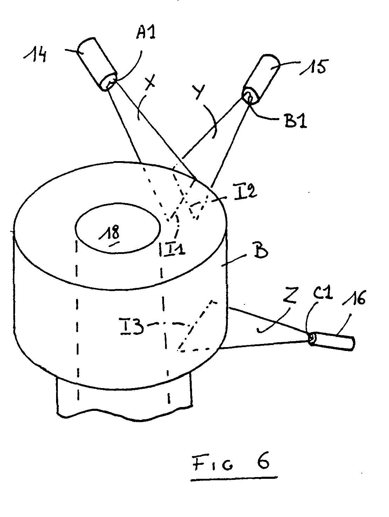

La figure 4 est, à plus grande échelle, une vue de dessus (ligne III) de la figure 1, La figure 5 est, à plus grande échelle, une vue de côté (ligne IV) de la figure 1,

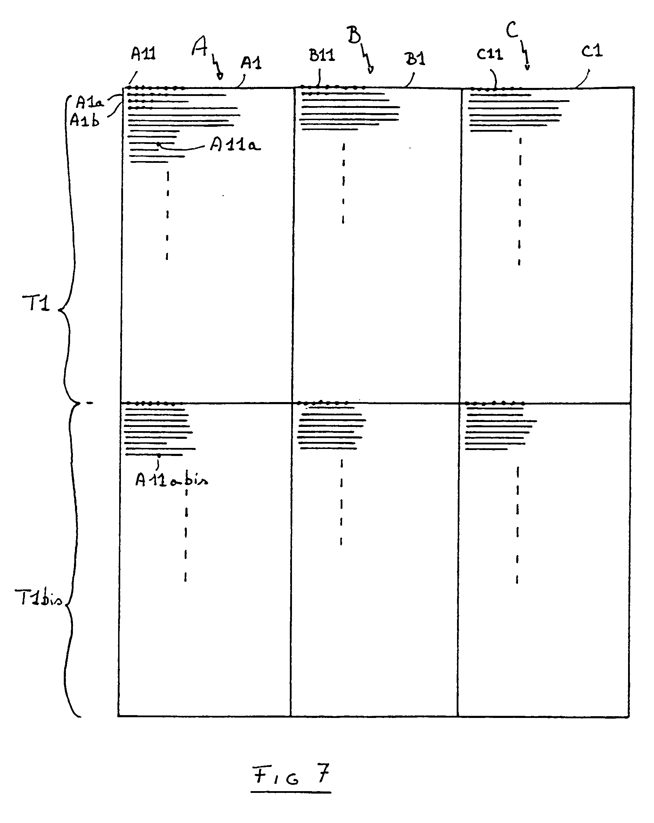

La figure 6 est une vue en perspective de la pièce à contrôler montrant les images linéaires ou sensiblement linéaires détectées,
La figure 7 est une vue schématique montrant une série d'images linéaires ou sensiblement linéaires développées,
La figure 8 est une vue schématique d'un traitement des images selon le dispositif suivant l'invention.
La figure 9 est une vue schématique d'un autre traitement des images,
La figure 10 est une vue schématique d'un autre dispositif suivant l'invention,
La figure 11 est une vue schématique montrant une bague présentant un filet hélicoïdal, ainsi que les images linéaires ou sensiblement linéaires prises sur cette bague selon un procédé suivant l'invention,
La figure 12 est une vue schématique montrant une série d'images matricielles développées,
La figure 13 est une vue schématique d'encore un autre traitement des images,
La figure 14 est une vue schématique d'un dispositif comprenant un boîtier de protection et de positionnement de camera boards, et
La figure 15 est une vue d'un détail d'un boîtier de protection de la figure 14.

### Description de formes de réalisation

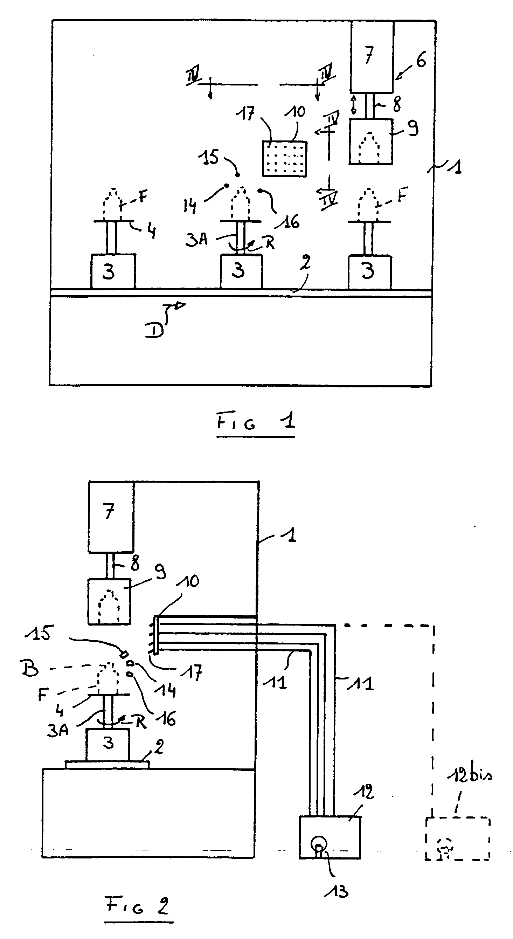

Dans la description du dispositif représenté à la figure 1, on a décrit l'utilisation du dispositif pour le contrôle de flacons. Il est clair que cette description n'est donnée qu'à titre d'exemple particulier uniquement et ne limite nullement le procédé et le dispositif suivant l'invention.

L'appareil montré à la figure 1 comprend un bâti 1 sur lequel est montée une bande transporteuse 2 portant des supports 3 pour les flacons à contrôler, lesdits supports comportant un arbre 3A portant un plateau 4 sur lequel est placé un flacon, ledit arbre lorsqu'il est amené devant le système ou dispositif de contrôle (5) étant entraîné en rotation (R) par un système ou moteur non représenté (vitesse de rotation de l'arbre, par exemple de 1 tour par 20 à 500 millisecondes, en particulier de 1 tour par 50 à 250 millisecondes). Le bâti porte également un dispositif 6 pour enlever d'un plateau un flacon lorsqu'une glaçure y a été détectée. Ce dispositif est par exemple constitué d'un vérin 7 dont la tige 8 porte une tête de préhension 9. Lorsqu'une glaçure a été détectée, après le déplacement du support portant le flacon avec glaçure en dessous de la tête de préhension 9, la tige du vérin est abaissée pour amener le flacon dans la tête 9 et pour fixer ou attacher le flacon dans la tête, et ensuite la tige du vérin est relevée pour ôter le flacon du support ou pour soulever le flacon par rapport au support. Il est clair que d'autres dispositifs pour éliminer des flacons avec glaçures peuvent être utilisés en lieu et place du dispositif représenté à titre d'exemple uniquement. Par exemple, un système d'éjection par jet d'air sur le flacon défectueux aurait pu être utilisé. Il est également clair que d'autres dispositifs pour déplacer les flacons auraient pu être utilisés pour amener les flacons devant le dispositif de contrôle ou pour les mettre en rotation devant le dispositif de contrôle. Par exemple, les flacons auraient pu être déplacés dans un état sensiblement couché, sur une bande ou courroie munie de dents vers un système pour amener le flacons en position sensiblement verticale et pour mettre en rotation sur lui-même le flacon placé en position verticale. Cette liste de dispositifs n'est pas limitative des possibilités de mise en mouvement relatif de la pièce par rapport aux têtes de prise d'image.

La bande 2 sert à amener (flèche D) successivement un support 3 portant un flacon (montré en traits interrompus) au voisinage ou devant le système de contrôle 5 et en dessous du dispositif de rejet 6.

Le système de contrôle comporte :
- une série de têtes d'illumination émettant chacune un rayon ou un faisceau lumineux 17 focalisées et/ou colimatées, lesdites têtes étant avantageusement munies d'un filtre et/ou d'un diaphragme et/ou d'une lentille de focalisation dirigeant chacune leurs rayons ou faisceaux sur une surface de la bague et dans une partie de la bague B du flacon F, la direction des rayons vers la bague peut être ajustée grâce à un montage mobile des têtes d'illumination sur un support 10, les têtes d'illuminations qui peuvent par exemple être au nombre de 2 à 100, voire plus, par exemple de 30 à 80, sont reliées chacune par des fibres optiques 11 à une boîte 12 contenant par exemple une lampe halogène 13 (de puissance par exemple comprise entre 50 et 250 Watts, en particulier entre 100 et 150 Watts);
- des systèmes de prise d'image (par exemple des têtes de prise de vue linéaire ou sensiblement linéaire ou matricielles ou sensiblement matricielles) 14,15,16, etc. de la partie du flacon ou de la bague éclairée par les sources lumineuses, et
- un système de traitement des images.

Les têtes d'illumination 17 sont agencées pour que leurs faisceaux soient décalés par rapport à l'axe de rotation du flacon, de façon avantageuse pour que leurs faisceaux soient focalisés sensiblement en un point ou zone dans la bague selon une direction "d" ne passant pas par l'ouverture centrale supérieure 18 du flacon F. Par rapport à un plan horizontal H, les têtes 17A1,17A2,17A3, 17A4 et 17A5, 17C 1,17C2,17C3, 17C4 et 17C5 émettent un faisceau formant un angle α1 d'environ 5° ou d'environ-5°, tandis que les têtes 17B1,17B2,17B3, 17B4 et 17B5, 17D1,17D2,17D3, 17D4 et 17D5 émettent un faisceau formant un angle α2 d'environ 15° ou d'environ-15°. Les têtes d'illumination 17A3,17B3,17C3 et 17 D3 émettent sensiblement dans un plan vertical V, tandis que les têtes 17A2,17B2,17C2 et 17D2, 17A4,17B4, 17C4 et 17D4 émettent des faisceaux formant un angle β1 d'environ. 10° ou d'environ -10° par rapport au plan vertical V. Enfin les têtes 17A1,17B1,17C1 et 17D1, 17A5,17B5, 17C5 et 17D5 émettent des faisceaux formant un angle β2 d'environ 20° ou d'environ -20° par rapport au plan vertical V. Chaque tête lumineuse 17A1,17A2, ... émet avantageusement un faisceau dont la section d'illumination (section perpendiculaire à la direction centrale du faisceau) est de forme quelconque, en particulier de forme rectangulaire ou sensiblement rectangulaire, carrée ou sensiblement carrée, elliptique ou sensiblement elliptique, circulaire ou sensiblement circulaire, dont le diamètre ou les côtés sont avantageusement compris entre 1 et 20 mm, de préférence entre 2 et 5 mm. Chaque tête est avantageusement située à une distance comprise entre 2 et 20 cm de l'objet ou flacon dont on contrôle la présence de glaçures ou de défauts. Pour certaine détection de défauts, il est recommandé d'agencer des têtes d'illumination pour que leur rayon soit sensiblement tangent à une face de la pièce à contrôler. Le nombre de têtes d'illumination est par exemple de 2 à 100, en particulier de 30 à 80.

Les têtes de prise d'images linéaires 14,15,16, etc. sont montées sur des bras 19 de manière à pouvoir modifier l'emplacement des têtes de prise d'image (hauteur, etc.) et l'angle de prise de vue. Les têtes de prise de vue correspondent chacune à l'extrémité d'un bras d'endoscope munie éventuellement d'une ou plusieurs lentilles ou objectifs et/ou d'un ou plusieurs filtres. Par têtes de prise de vue dans cette forme de réalisation, on entend donc le capteur d'un bras d'endoscope, ledit capteur étant éventuellement muni d'une ou plusieurs lentilles ou objectifs et/ou d'un ou plusieurs filtres, tandis que le bras d'endoscope comporte une ou des fibres optiques ordonnées ou non, ou une fibre optique ou une fibre assimilée à une fibre optique à transfert d'image matricielle ou linéaire (en particulier une ou des fibres d'endoscope) pour relier la tête de prise d'image à un capteur linéaire ou à une caméra linéaire ou à une caméra du type CID ou équivalent (caméra possédant un capteur matriciel à adressage de pixel ou à lecture aléatoire de pixels, caméra apte de reconstituer une image linéaire ou sensiblement linéaire ou une série d'images linéaires ou sensiblement linéaires). Un même endoscope permet de relier plusieurs têtes de vues distinctes à une même caméra ou capteur ou système de traitement d'images, ceci assurant une compacité suffisante de l'ensemble ou un encombrement acceptable, malgré le nombre important de têtes de prise de vue. Dans l'exemple représenté, on a représenté uniquement trois têtes de prise d'image, il est clair que l'on peut avoir de manière d'ailleurs avantageuse plus de trois têtes de prise de vue, par exemple 5,10,20, 50,100, voire plus.
En accroissant le nombre de têtes de vue, il est possible d'accroître la fiabilité de la détection de glaçures dans des pièces à examiner. Par exemple, en utilisant 10 têtes de vues pour examiner le goulot de pièces, il a été possible d'assurer la détection de pièces présentant une glaçure (par exemple verticale) d'une surface supérieure ou égale à 0,1mm² dans le goulot avec un risque de non détection d'une glaçure inférieure à 0,01%, en particulier inférieure à 0,001%. Ceci revient à dire que sur 100.000 flacons examinés, un flacon présentant une glaçure de surface égale ou supérieure à 0.1 mm² risque de ne pas être détecté.

Les têtes de prise d'images 14,15,16 (trois têtes étant représentées sur les figures à titre d'exemple uniquement, alors que dans les formes de réalisation avantageuses, le nombre de têtes de prise d'image sera supérieur à 10,20, voire plus) associées à la caméra (linéaire dans l'exemple représenté) prennent des images sensiblement linéaires ou sensiblement linéaires distinctes, à savoir pour la tête 14. l'image A1 correspondant à l'intersection I1 du plan A avec le flacon; pour la tête 15, l'image B1 correspondant à l'intersection I2 du plan Y avec le flacon, et pour la tête 16, l'image C1 correspondant à l'intersection 13 du plan Z avec le flacon F. Les plans X,Y,Z sont inclinés les uns par rapport aux autres. Toutefois, seule l'intersection I1 du plan X avec le flacon et l'intersection I2 du plan Y avec le flacon se croisent à la surface extérieure de la bague.

Dans le cas représenté, chaque tête d'image est destinée à prendre une image linéaire ou sensiblement linéaire constituée d'un nombre de points d'image ou pixels adjacents, par exemple d'un nombre supérieur à 50, voire supérieur à 100 ou plus. Chaque tête 14,15,16 est reliée par des fibres optiques 20 d'un endoscope à une caméra linéaire. Cette caméra a avantageusement un temps d'intégration des pixels inférieur à 1/1000ème de seconde, par exemple un temps d'intégration des pixels compris entre 1/1000ème et 1/100000ème de seconde, voire moins. Il est clair que le dispositif peut comprendre plusieurs caméras linéaires, en particulier si le nombre de têtes de prise d'image linéaire ou sensiblement linéaire est important.

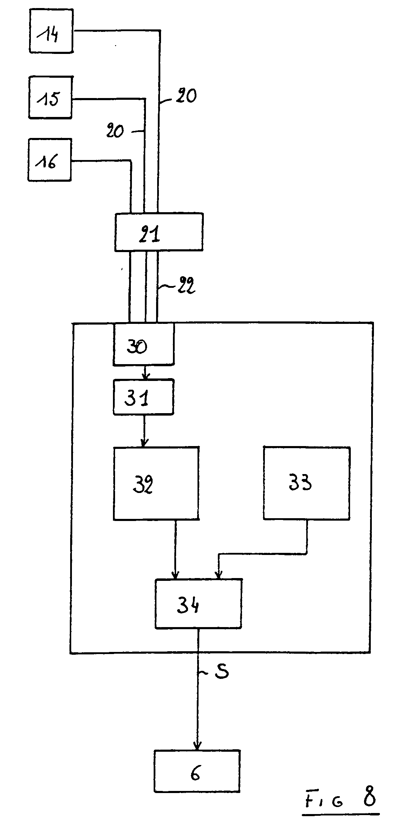

De par la rotation du flacon autour de son axe, toute la surface extérieure de la bague est amenée à passer successivement devant les têtes de prise d'image. Ainsi, le système de traitement reçoit en fait des images linéaires ou sensiblement linéaires développées de la bague, c'est-à-dire une succession d'images linéaires ou sensiblement linéaires, décalées dans le temps. Si des images linéaires ou sensiblement linéaires sont prises sur plus d'un tour de rotation, on obtient une image développée correspondant à plusieurs passages de la surface extérieure du flacon devant les têtes de prise d'image. Les images ainsi obtenues sont représentées de manière schématique à la figure 7. Ainsi, qu'on le voit, chaque image linéaire ou sensiblement linéaire A1,B1,C1 est composée de points d'image
ou pixels A11,B11,C11, tandis que les images développées correspondent à une succession d'images linéaires ou sensiblement linéaires (A1,A1a,A1b,...), par exemple un nombre d'images linéaires ou sensiblement linéaires successives compris entre 25 et 2500, en particulier 32, 64, 128, 256, 512 ou 1024 images linéaires ou sensiblement linéaires par rotation du flacon sur un tour. Le nombre d'images linéaires ou sensiblement linéaires par tour dépend du temps d'intégration de la caméra linéaire, de l'intensité des sources lumineuses, de la teinte de la pièce
ou article à contrôler et de ses paramètres physiques, de la vitesse de rotation du flacon, de la taille du flacon et de la précision du contrôle souhaitée. Une image développée d'une tête de prise d'image linéaire correspond donc à une succession avantageusement continue ou sensiblement continue d'au moins 25 (avantageusement d'au moins 100) images linéaires prises par la tête, chaque image linéaire étant constituée d'au moins 25 pixels.

La caméra linéaire ou matricielle 21 est reliée par un moyen de transfert de signal 22, par exemple par des fibres optiques ou par un dispositif de transfert de signaux électroniques digitaux ou analogiques, à un système de traitement des images qui traite et analyse les images pour mettre en évidence une ou des glaçures. La caméra linéaire ou matricielle peut être une caméra à digitalisation et traitement interne. Dans ce cas, sont intégrés dans la caméra, un système de digitalisation ou un système de numérisation et un système de traitement des images.

Un tel système de traitement des images est représenté de manière schématique à la figure 8. Ce système comporte :
- un moyen de réception 30 des points d'images des images linéaires ou matricielles provenant de la caméra linéaire ou matricielle 21 par le dispositif de transfert de signal 22, ce moyen 30 permettant éventuellement un traitement de l'image reçue par la caméra linéaire ou matricielle, par exemple un filtrage
ou une amplification de défauts,
- un moyen 31 recevant des signaux du moyen de réception 30 pour numériser et éventuellement traiter les points d'image de chaque image linéaire ou sensiblement linéaire réceptionnée éventuellement traitée et pour attribuer à chaque point d'image un niveau de gris ou de couleur ou une information de luminosité couleur.
- un moyen ou mémoire 32 recevant des signaux du moyen 31 pour stocker le niveau de gris ou de couleur ou information de luminosité couleur attribué à chaque point d'image numérisé,
- une mémoire 33 contenant le niveau de gris ou de couleur ou information de luminosité couleur attribué à chaque point d'image numérisé d'une image développée dite de référence,
- un moyen 34 recevant des signaux du moyen 32 et de la mémoire 33, ledit moyen 34 comparant, pour chaque point d'image numérisé, le niveau de gris ou de couleur ou l'information de luminosité couleur de l'image réceptionnée éventuellement traitée au niveau de gris ou de couleur ou information de luminosité couleur de l'image de référence, déterminant pour chaque point d'image, une différence de niveau de gris ou de couleur ou de luminosité couleur, et émettant un signal lorsque la différence de niveau de gris ou de couleur ou de luminosité couleur déterminée est supérieure à une valeur déterminée. Le moyen 34 émet avantageusement un signal vers la mémoire 33 pour rechercher dans celle-ci le signal du point d'image de l'image de référence équivalent au point d'image numérisé qui doit être comparé.

Dans le cas où la caméra linéaire ou matricielle intègre un système de traitement et un système de digitalisation ou de numérisation, le système de traitement de la figure 8 se simplifie en un moyen de réception de signaux digitaux de la caméra, une mémoire 32, une mémoire 33 et le moyen 34. Dans des formes de réalisation possibles, la caméra intègre également les mémoires et le moyen de traitement 34, de sorte que c'est la caméra qui émet le signal S.

Le moyen 34 identifie avantageusement les défauts de glaçure détectés, les classifie, et détermine leurs positions. Dans ce cas, le moyen 34 envoie un signal vers une mémoire, par exemple vers la mémoire 32 ou une autre mémoire.

Le système de traitement des images envoie, lors de la détection d'un défaut ou d'une glaçure, le signal S vers le dispositif 6 pour commander l'enlèvement ou l'éjection du flacon de son support.

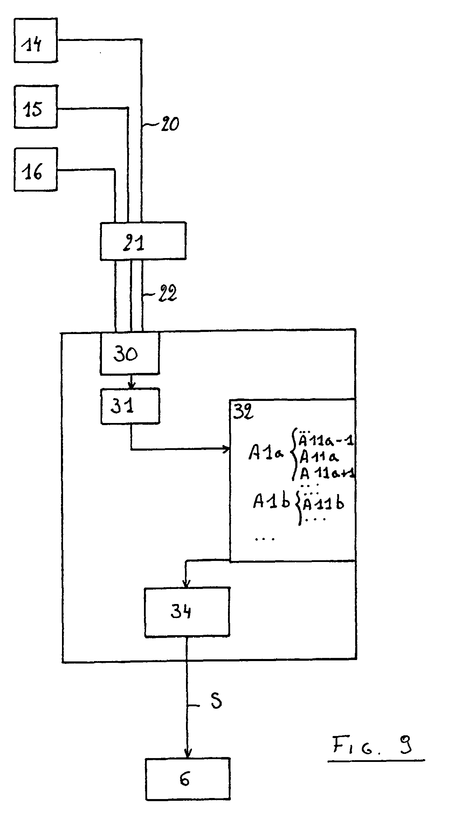

La figure 9 montre schématiquement un autre système de traitement des images. Dans ce système, on prend pour hypothèse que la fabrication des flacons a été effectuée de manière correcte de sorte que seuls des défauts locaux et glaçures locales sont présents, de sorte que lors de la rotation du flacon, ces défauts locaux ou glaçures locales se traduiront par une différence de gris pour un ou des points d'image par rapport aux points d'image adjacents.
Ce système de traitement comporte :
- un moyen de réception 30 des points d'images des images linéaires ou sensiblement linéaires ou matricielles ou sensiblement matricielles provenant de caméras linéaires ou matricielles 21 par un dispositif de transfert de signaux 22, lesdites caméras recevant des signaux des têtes d'endoscope ou capteurs 14,15,16 par des fibres optiques 20,
- un moyen 31 recevant les signaux du moyen 30, traitant éventuellement lesdits signaux et numérisant les points d'image de chaque image linéaire ou sensiblement linéaire réceptionné et pour attribuer à chaque point d'image un niveau de gris ou de couleur,
- un moyen 32 pour stocker le niveau de gris ou de couleur attribué à chaque point d'image numérisé,
- un moyen 34 recherchant des informations dans le moyen 32; comparant, pour chaque point d'image A11b,... numérisé d'une image linéaire A1b, le niveau de gris ou de couleur du point d'image de ladite image linéaire considérée au niveau de gris ou de couleur du point d'image A11a correspondant de l'image linéaire précédente A1a et avantageusement au niveau de gris ou de couleur des points d'image A11a-1,A11a+1 de l'image linéaire précédente A 1a situés de part et d'autre du point d'image correspondant, ledit moyen 34 déterminant alors pour chaque point d'image, une différence de niveau de gris ou de couleur du point d'image d'une image linéaire par rapport au niveau de gris ou de couleur du point d'image correspondant de l'image linéaire précédente et/ou au niveau de gris ou de couleur des points d'image adjacents audit point d'image correspondant, et émettant un signal lorsque la différence de niveau de gris ou de couleur déterminée est supérieure à une valeur déterminée.

Il est clair que le moyen 34 aurait pu comparer le niveau de gris ou de couleur d'un point d'image d'une première image linéaire au niveau de gris ou de couleur du point d'image correspondant d'une autre image linéaire ou sensiblement linéaire, en particulier de l'image linéaire ou sensiblement linéaire suivant ladite première image linéaire.

Lorsque le moyen 32 est apte à stocker le niveau de gris ou de couleur attribué à chaque point d'image numérisé d'une image correspondant au développement d'une image linéaire ou sensiblement linéaire sur deux ou plus de deux tours de rotation du flacon (voir figure 7), le moyen 34 compare avantageusement, au moins pour les points d'image pour lesquels une différence de niveau de gris ou de couleur supérieure à un seuil déterminée a été détectée par rapport au niveau de gris ou de couleur d'un ou de points d'image de l'image linéaire ou sensiblement linéaire précédente ou suivante, le niveau de gris ou de couleur d'un ou de points d'image A11a d'une image linéaire ou sensiblement linéaire A 1a développée sur un tour T1 au niveau de gris ou de couleur du ou desdits points d'image correspondants A11abis pour l'image linéaire ou sensiblement linéaire développée A1abis lors d'un autre tour de rotation T1bis de la pièce.

Les moyens 31, 32 et 34 peuvent être constitués d'un ordinateur ou d'un moyen de calcul quelconque comportant un programme de traitement de données. Cet ordinateur ou moyen de calcul peuvent être éventuellement intégrés partiellement ou totalement dans la caméra (par exemple linéaire ou CID).

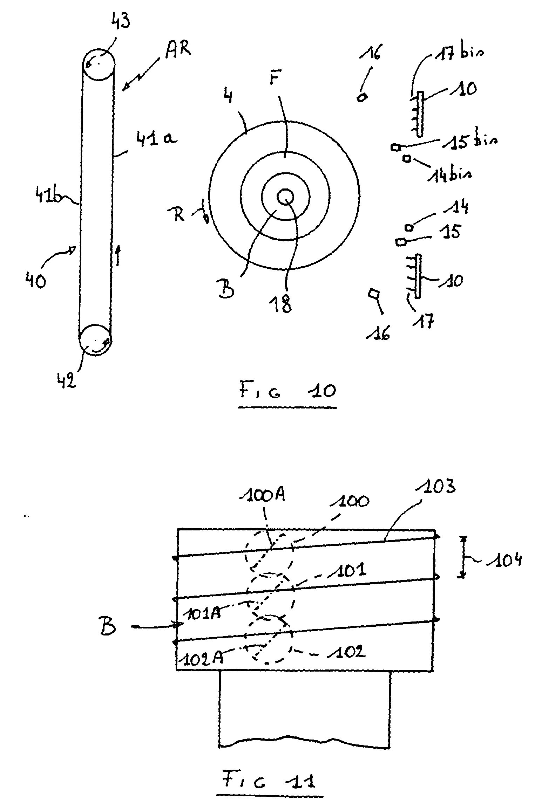

Le dispositif de la figure 10 est similaire à celui de la figure 1, si ce n'est qu'il comporte deux systèmes distincts pour éclairer le flacon en deux endroits distincts, de sorte qu'une partie du flacon est éclairée successivement par une première série de sources lumineuses focalisées ou colimatées 17, et par une deuxième série de sources lumineuses focalisées ou colimatées 17Bis. Le dispositif comporte également des systèmes de prises d'image distincts pour prendre des images linéaires ou matricielles du flacon dans la zone éclairée par la première série de sources lumineuses et pour prendre des images linéaires ou matricielles du flacon dans la zone éclairée par la deuxième série de sources lumineuses. En utilisant des sources lumineuses distinctes (par exemple de couleur différente, source lumineuse rouge et source lumineuse bleue), il est possible de détecter des défauts différents et sans interférence.

Pour arriver sensiblement au même résultat que celui obtenu par le dispositif de la figure 10, on aurait pu utiliser le dispositif de la figure 1, mais de prévoir une ou plusieurs boîtes 12 contenant des lampes halogènes ou autres de couleur différente (boîte 12bis représentée en traits interrompus à la figure 1). Ainsi, par exemple sur un ou plus d'un tour, par exemple deux tours de rotation du flacon, un halogène de couleur rouge émet via les fibres optiques et via les têtes d'illumination, des rayons lumineux rouges sur une partie du flacon, tandis qu'ensuite sur un tour ou plus d'un tour de rotation du flacon, un halogène de couleur bleue émet via les fibres optiques et via les têtes d'illumination, des rayons lumineux bleus sur une partie du flacon. Un tel dispositif est avantageux pour éviter des interférences entre différentes associations émetteur (têtes d'illumination) - récepteur (têtes de prise de vue). Au lieu d'utiliser des lampes halogènes ou autres émettant des rayons de couleur différente, on peut également utiliser une lampe halogène ou autre émettant des rayons de couleur différente ou blanche et un ou des filtres montés avantageusement sur les têtes d'illumination pour permettre d'obtenir une illumination de couleur différente de la pièce. Le filtre peut éventuellement être placé au niveau de la boîte 12, de manière à permettre au rayon filtré de passer via les fibres optiques vers les têtes des sources lumineuses, est toutefois placé sur la tête d'illumination.

Les têtes de prise de vue linéaire ou matricielle sont dirigées vers une ou des parties du flacon éclairées. A l'arrière plan du flacon dont des images linéaires ou sensiblement linéaires ou matricielles ou sensiblement matricielles sont prises, il est avantageux de placer un fond AR de couleur uniforme (par exemple de couleur blanche, de couleur sombre, voire noire, de couleur bleue, de couleur rouge, etc.). Un tel fond est représenté à la figure 10. Toutefois, selon une forme de réalisation particulière, on modifie lors d'une opération de contrôle d'un flacon la couleur de l'arrière plan. Par exemple, pour un certain nombre de tours de rotation du flacon, on utilise un arrière plan de couleur blanche, tandis que pour un autre nombre de tours de rotation du flacon on utilise un arrière plan de couleur noire. De façon avantageuse, le dispositif de contrôle suivant l'invention comporte un moyen 40 pour modifier de façon automatique un arrière plan (par exemple de couleur blanche) par un autre arrière plan (par exemple de couleur noire). Un tel moyen est par exemple un vérin dont la tige est actionnée après x (avec x =1, deux ou plus) rotations du flacon pour pousser une plaque de couleur blanche ou noire pour l'amener devant un arrière plan de couleur noire ou blanche, ou pour retirer une plaque de couleur blanche ou noire placée devant un arrière plan de couleur noire ou blanche. On pourrait également utiliser une bande 41 sans fin présentant une partie 41 a de couleur blanche et une partie 41 b de couleur noire, ladite bande formant l'arrière plan des prises de vues et étant entraînée par un moteur 42 (par exemple en continu ou commandé par ou lors de la rotation du flacon ou par le déplacement des supports portant les flacons ou lors d'un déplacement des supports). La bande 41 s'étend entre deux rouleaux de renvoi 43, dont l'un est entraîné en rotation par le moteur 42. Ce dispositif est représenté de manière schématique à la figure 10.

On peut également changer la couleur de l'arrière-plan en utilisant des rayons ou faisceaux colorés incidents de couleur différente ou en utilisant un arrière-plan diffusant des rayons colorés différents.

Pour détecter la présence de glaçures horizontales dans la partie centrale d'un flacon, partie située entre le fond et le goulot ou bague du flacon, on éclaire avantageusement le flacon au moyen d'une source lumineuse diffuse ou au moyen de tête(s) d'illumination apte(s) à émettre un rayonnement lumineux diffus ou au moyen d'un arrière-plan émettant un rayonnement lumineux diffus.

Les procédés décrits ci-avant utilisent un mouvement relatif de la pièce par rapport aux têtes de prise d'image correspondant à un mouvement de rotation sur un ou plusieurs tours. Un tel mouvement de rotation est avantageux pour le contrôle de pièces de forme sensiblement cylindrique ou circulaire. Il est clair que d'autres mouvements relatifs sont possibles, par exemple un mouvement relatif de rotation sur moins d'un tour, par exemple sur 45°, sur 60°, sur 90°, sur 180°. Pour obtenir un mouvement relatif de rotation, il est également possible de monter les têtes de prise de vue (et avantageusement la caméra linéaire) sur un support qui peut être mis en rotation par rapport à la pièce à contrôler. En tant qu'autre mouvement relatif, on peut également citer un mouvement relatif de translation de la pièce par rapport aux têtes de prise de vue et une combinaison d'un mouvement relatif de rotation avec un mouvement relatif de translation, voire la combinaison de deux mouvements relatifs de rotation autour d'axes de rotation différents.

Dans le procédé suivant l'invention, il est possible de combiner la prise d'image statique, par exemple dans un plan image (pas de mouvement relatif entre la pièce et les têtes de prise d'image), et la prise d'image matricielle avec mouvement relatif de la pièce par rapport aux têtes de prise d'image. Dans ce cas, le dispositif de contrôle doit disposer d'une caméra CDD matricielle ou linéaire ou équivalente. Cela permet de prendre une image « statiquement » ou avec un temps d'intégration suffisamment court pour être considérée comme tel pendant le mouvement relatif de la pièce à contrôler.

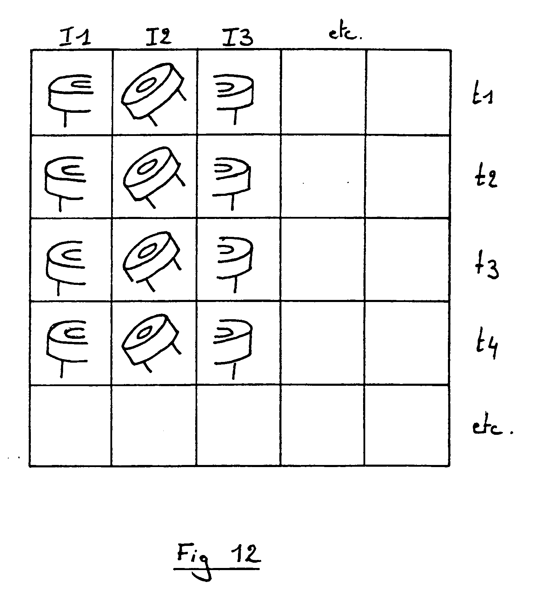

La figure 12 est une vue schématique d'une série d'images développées, chaque image état prise par un capteur matriciel. Chaque image prise par un capteur matriciel est par exemple composé d'au moins 25x25 points images ou 625 pixels. Par exemple, un capteur matriciel 14 prend successivement et de manière décalée dans le temps des images matricielles I1 (partie de gauche du goulot), un capteur matriciel 15 prend successivement et de manière décalée dans le temps des images matricielles 12 (goulot dans son entièreté mais en perspective), et un capteur matriciel 16 prend successivement et de manière décalée dans le temps des images matricielles I3 (partie de droite du goulot). Les images développées sont constituées d'une série d'images I1,I2 et I3 prises au temps t1,t2,t3,t4, etc. De façon avantageuse, l'image prise au temps tₓ (par exemple t2) par un capteur et l'image prise au temps tₓ₋₁ (par exemple t1) par ledit capteur se recouvrent partiellement. Ainsi, la face du goulot tournée vers le capteur prise en image au temps t1 est au moins partiellement prise en image au temps t2. Ces images développées peuvent ensuite être analysées de même manière que les images développées de la figure 7.

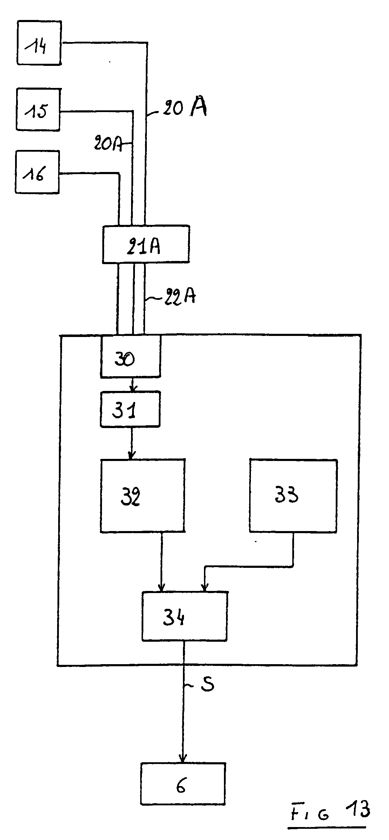

La figure 13 est une vue schématique d'un autre dispositif suivant l'invention. Par rapport au dispositif de la figure 1 et au traitement schématisé à la figure 8, le dispositif de la figure 13 ne comporte pas d'endoscope dont l'extrémité sert de tête de prise d'image. Dans le dispositif de la figure 13, les têtes de prise d'image 14, 15, 16, etc. sont des caméras boards ou des cartes électroniques de prise de vue. Une telle tête de prise d'images est avantageusement une « camera board » ou une carte caméra électronique, avec éventuellement son objectif ou sa lentille de prise d'image. Cette camera board est composé avantageusement d'une caméra carte appelée aussi « board camera » ou « board level camera », ou encore de micro caméras, avec ou sans objectif intégré, ou encore de « caméras à tête déportée » ou encore « micro head camera ». Eventuellement, la tête de prise d'image ou capteur est par exemple « pixeltype CMOS imagers » (CMOS : Complementary metal oxide semi conductors) ou une « camera on a chip» (puce électronique munie d'une caméra). Les signaux sont transmis par le dispositif de transfert de signaux 20A vers un centralisateur d'images 21A. Les images sont transférées du centralisateur 21A vers le système de traitement d'image par le dispositif de transfert de signaux 22A. Le système de traitement comporte un organe de réception et de mémorisation des signaux (images) 30, un moyen pour attribuer à chaque point d'image un niveau de gris ou de couleur 31, une mémoire pour stocker le niveau de gris ou de couleur attribué à chaque point d'image 32, un moyen 34 comparant pour chaque point image, le niveau de gris ou de couleur au niveau de gris ou de couleur attribué (provenant de la mémoire 33). Le moyen 34 émet un signal S lors de la détection d'une différence de niveau de gris ou de couleur supérieure à un niveau prédéterminé, c-à-d lors de la détection d'une glaçure. Ce signal S sert à commander le dispositif 6 pour éjecter le flacon présentant la glaçure.
Dans l'exemple de la figure 13, les têtes de prise de vue ou « camera boards » sont déportées par rapport au centralisateur 21A. Le centralisateur d'image 21A permet de centraliser les signaux de synchronisation ou les images provenant des capteurs, le centralisateur est toutefois facultatif.

Les exemples de dispositifs décrits ci-avant ont été présentés pour le contrôle de flacons. Il est clair que l'on peut remplacer lesdits flacons par tout objet ou pièce réalisé en une matière sensiblement transparente ou sensiblement translucide à au moins certaines longueurs d'onde, dont les défauts ou glaçures sont à même de permettre une réflexion d'un rayon lumineux quelconque. A titre d'exemples particuliers d'objet ou pièce dont on peut contrôler la présence ou non de glaçures ou défauts au moyen du dispositif suivant l'invention ou par le procédé suivant l'invention, on peut citer flacons, bouteilles, fioles, préformes, ampoules, seringues, anneaux (d'isolation électrique), tubes, conduits, verres, gobelets, etc. réalisés par exemple en verre, en verres spéciaux, en plastique, tel que PVC, PET, polycarbonate, pierres précieuses, diamant, etc. Les objets ou pièces cités ci-avant sont par exemple utilisés dans l'industrie pharmaceutique, vétérinaire, cosmétique, chimique, parfumerie de luxe, etc.

Dans le cas du contrôle de pièces présentant une irrégularité de surface sensiblement hélicoïdale, telle qu'un filet, on prend avantageusement plusieurs images linéaires ou sensiblement linéaires de la partie de pièce présentant ladite irrégularité, chaque image linéaire ou sensiblement linéaire correspondant à l'intersection d'un plan avec la partie de pièce vue dans ledit plan, chaque plan desdites images, éventuellement après une rotation autour de l'axe de rotation de la pièce, correspondant à un autre plan d'une image ou étant parallèle à un autre plan d'une image. Par exemple, chaque image linéaire ou sensiblement linéaire de ladite partie correspond à l'image de l'irrégularité hélicoïdale sur une hauteur égale ou inférieure au pas de l'hélice de l'irrégularité hélicoïdale. On a représenté à la figure 11. une bague B munie d'un filet hélicoïdal 103, les champs de vue 100,101,102 des têtes de prise d'image, et les images linéaires ou sensiblement linéaires 100a,101A et 102A captées par la caméra linéaire. Ces images linéaires ou sensiblement linéaires correspondent dans le cas présent à l'intersection de la bague par des plans parallèles, chaque image linéaire ou sensiblement linéaire correspondant à l'image linéaire ou sensiblement linéaire du filet sur une hauteur 104 égale au pas du filet hélicoïdal.

Dans l'exemple de réalisation représenté ci-avant, on a utilisé des caméras linéaires pour prendre, via l'endoscope et les têtes de prise de vue, des images linéaires ou sensiblement linéaires. Selon une forme de réalisation possible, on utilise une caméra matricielle reliée par un endoscope à plusieurs têtes de prise de vue pour prendre une série d'images matricielles distinctes. Lors de la rotation de la pièce à contrôler, on prend par chaque tête de prise de vue une série d'images décalées dans le temps. On obtient ainsi, pour chaque tête de vue, une série d'images matricielles formant une image matricielle développée de la partie de la pièce vue par la tête de prise de vue. Avantageusement on utilise une caméra ou un capteur dont le temps d'intégration est suffisamment court pour pouvoir figer une image d'une pièce en mouvement et dont la fréquence d'acquisition d'image est suffisamment élevée pour qu'une même partie de la pièce en mouvement relatif se retrouve partiellement dans deux images matricielles successives prises par une tête de prise de vue (décalées dans le temps). La détection de glaçures ou la confirmation de la présence de glaçures peut éventuellement être réalisée en comparant le niveau de gris ou de couleur de pixels de deux images successives.

Le procédé suivant l'invention est apte à détecter des glaçures. Toutefois, il est clair que le procédé suivant l'invention est également apte à détecter d'autres défauts, défauts qui sont plus facilement détectables qu'une glaçure, en particulier qu'une glaçure s'étendant dans la matière même de l'objet (goulot de la pièce en verre).

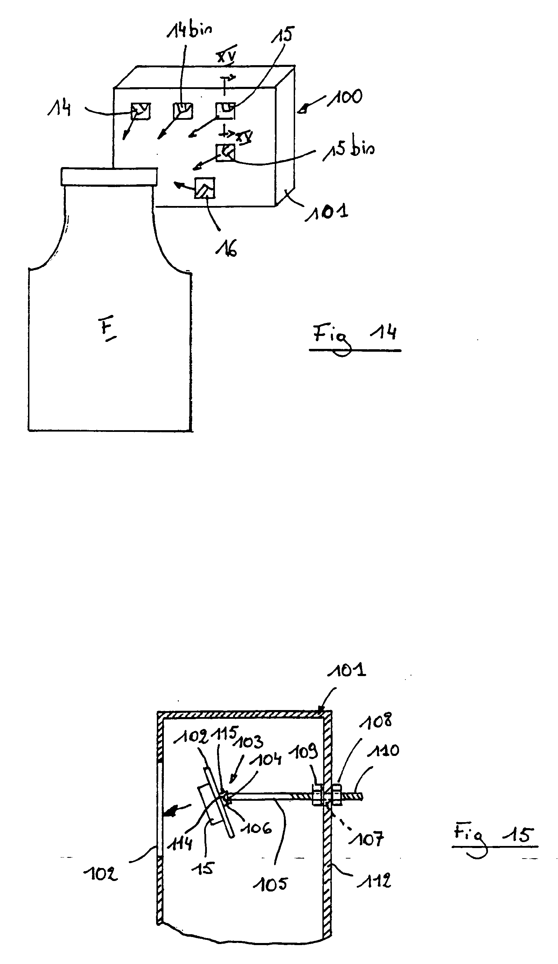

Dans une forme avantageuse de réalisation montrée schématiquement à la figure 14. on utilise des têtes de prise d'images de type « camera board » 14,15,16,etc. qui sont montées dans un ou plusieurs dispositifs mécaniques de protection, et fixés sur des supports réglables et orientables, munis d'éléments de support des objectifs de prise de vue éventuels. Dans cette forme de réalisation, les têtes de prise de vues sont donc des « camera boards », avantageusement déportées par rapport à un centralisateur de signaux de synchronisation et/ou des images acquises (tel que représenté schématiquement à la figure 13).

Le système mécanique 100 peut comporter au moins trois « camera boards », cinq dans la forme représentée à la figure 14 (14,14bis,15,15bis,16). Le système mécanique peut comporter plus de cinq « camera boards », par exemple 6, 10, voire 20 ou plus. Le système mécanique 100 est un support ou boîtier 101 présentant des fenêtres 102, ledit boîtier servant de protection aux « camera boards ». Les « camera boards » sont agencées dans le boîtier 101 1 de manière à prendre, lors de la rotation de la pièce à contrôler, une séquence ou série d'images redondantes, images matricielles ou sensiblement matricielles ou linéaires ou sensiblement linéaires. Pour assurer un agencement correct des camera boards, il est prévu de monter les camera boards, de préférence chaque camera board de manière indépendante, sur un support 102 monté sur un système 103 permettant une inclinaison ou orientation du support et donc de la camera board portée par le support. Le système 103 est par exemple une rotule 104 portée par l'extrémité d'un bras 105, ladite rotule étant engagée dans un creux sensiblement sphérique 106 d'une pièce solidaire du support 102. Ce système permet d'orienter le support 102 et donc la caméra board par rapport à deux axes de pivotement orthogonaux entre eux. Pour assurer la fixation du bras 105 au boîtier, l'extrémité 110 du bras opposée à l'extrémité munie de la rotule est filetée et est adaptée pour être engagée dans un trou 107 du boîtier. Un écrou 108 et un contre écrou 109 sont visés sur l'extrémité filetée pour permettre la fixation du bras à la paroi 112 du boîtier et pour permettre d'ajuster le positionnement de la rotule par rapport à ladite paroi 112.
Le boîtier de protection 101 est avantageusement monté sur un système permettant d'ajuster sa position verticale et/ou horizontale par rapport à la position de la pièce à contrôler mise en rotation.

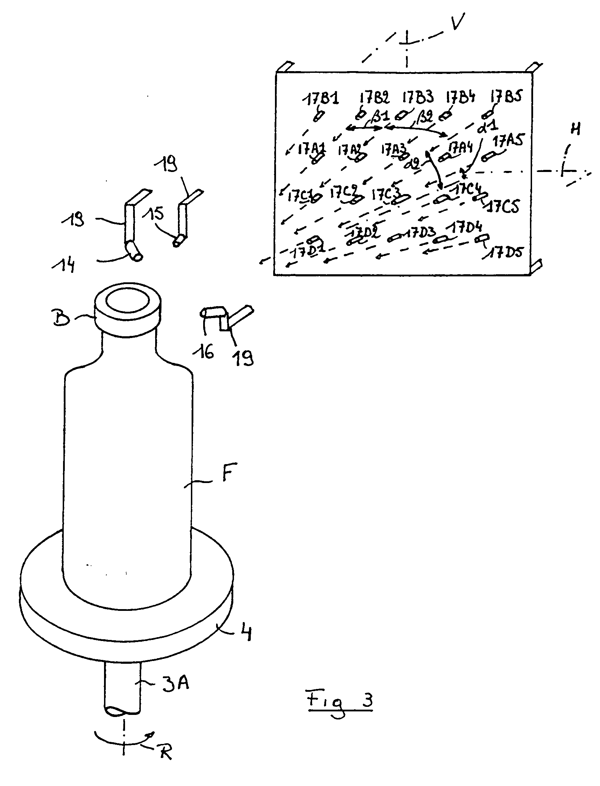

Dans la figure 14. on n'a pas représenté le système de mise en rotation de la pièce à contrôler F, ni le dispositif pour éclairer la pièce à contrôler mise en rotation. Ce système et ce dispositif sont par exemple du type représenté à la figure 3.

Par rapport au dispositif de la figure 3, le dispositif de la figure 14 remplace les extrémités d'endoscope 14,15,16 par des camera boards, le reste de la figure 3 restant d'application pour la figure 14. La séquence d'images acquises par le dispositif de la figure 14 est conforme à ce qui est représenté en figure 12, ainsi qu'à la vue schématique de la figure 13.

Une vis 115 est vissée dans un trou de la pièce 114 pour assurer le maintien de la position du support 102 par rapport à la rotule 104.

## Revendications

1. Procédé pour détecter des glaçures dans des pièces réalisées en une madère translucide ou transparente permettant au moins une réflexion partielle d'un ou de rayons électromagnétiques dans une direction traversant la matière, dans lequel au moyen d'au moins un rayon lumineux visible ou non, UV, IR ou faisceau de ceux-ci on illumine une pièce
ou une partie de pièces en mouvement relatif par rapport aux rayons électromagnétiques, on prend au moyen de plusieurs têtes de prise d'image des images de la pièce ou parties de pièce illuminée en mouvement relatif par rapport aux têtes de prise d'image, et dans lequel on traite les images pour détecter une ou des glaçures, ledit procédé étant **caractérisé en ce que** :
- lors d'au moins une partie du mouvement relatif entre la pièce et des têtes de prise d'image, pour des parties du goulot ou bagne illuminé, on prend, de manière décalée dans le temps, plusieurs images linéaires ou sensiblement linéaires ou matricielles ou sensiblement matricielles distinctes et formées d'au moins 25 points d'image ou pixels, au moyen d'une série de plus de cinq têtes de prise d'image choisies parmi le groupe constitué d'extrémités d'endoscopes de prise d'images et de capteurs d'images déportés par rapport au dispositif de traitement d'image, lesdites têtes étant reliées par un dispositif de transfert de signaux à un dispositif de traitement d'images, de manière à obtenir, éventuellement après traitement d'une ou d'images prises, une série d'images développées correspondant chacune au développement des points d'images ou pixels d'au moins 25 images linéaires ou sensiblement linéaires décalées dans le temps de la pièce en mouvement relatif ou d'au moins une série d'au moins quatre images matricielles ou sensiblement matricielles décalées dans le temps, et
- on traite la série d'images développées ou au moins une partie de celles-ci pour mettre en évidence une ou des glaçures dans la pièce.

2. Procédé suivant la revendication 1 pour la détection de glaçures verticales d'une surface supérieurs ou égale à 0,1 mm² avec un risque de non détection inférieure à 0,01%, **caractérisé en ce qu'**on prend plus de 10 images linéaires ou sensiblement linéaires formées chacune d'au moins 50 points d'images ou pixels, au moyen de têtes de prise d'image choisies parmi le groupe constitué d'extrémités d'endoscopes de prise d'images et de capteurs d'images déportés par rapport au dispositif de traitement d'image, lesdites têtes étant reliées par un dispositif de transfert de signaux à un dispositif de traitement d'images.

3. Procédé suivant l'une des revendications 1 et 2, **caractérisé en ce qu'**on éclaire la pièce ou une ou des parties de celle-ci au moyen d'une série de têtes d'éclairage émettant des rayons ou faisceaux lumineux, des rayons UV ou des rayons IR.

4. Procédé suivant l'une des revendications 1 à 3, **caractérisé en ce qu'**on traite la série d'images développées ou au moins une partie de celles-ci pour associer à chaque point d'image de celles-ci un niveau de gris ou de couleur et pour comparer le niveau de gris ou de couleur de chaque point d'image au niveau de gris ou de couleur d'un point d'image d'une ou d'images de référence et/on au niveau de gris ou de couleur d'un ou d'autres points d'image d'une image développée, de manière à déterminer une différence de niveau de gris ou de couleur correspondant à la présence d'une glaçure dans les parties de la pièce prises en image.

5. Procédé suivant la revendication 4, **caractérisé en ce qu'**au moins pour une partie de la série d'images développées, on compare le niveau de gris ou de couleur de points d'image d'une image développée, de façon avantageuse de chaque point d'image d'une image développée, au niveau de gris ou de couleur d'un ou d'autres points d'images de ladite image développée et/ou au niveau de gris ou de couleur d'un ou d'autres points d'images d'une autre image développée, éventuellement après traitement.

6. Procédé suivant l'une quelconque des revendications 1 à 4, **caractérisé en ce que** pour des parties de la pièce en mouvement relatif, on prend au moyen de têtes de prise de vue, plusieurs images linéaires ou sensiblement linéaires ou matricielles ou sensiblement matricielles, redondantes et formées d'au moins 25 points d'image ou pixels, de manière à obtenir, éventuellement après traitement, une série d'images développées redondantes correspondant à au moins deux images développées correspondant chacune pour une même partie de la pièce en mouvement relatif par rapport aux dites têtes de prise de vue, au développement des points d'images ou pixels d'une image linéaire ou sensiblement linéaire ou matricielle ou sensiblement matricielle éventuellement traitée.

7. Procédé suivant l'une des revendications 1 à 6, **caractérisé en ce qu'**on illumine une partie de la pièce au moyen d'un premier rayon lumineux visible ou non, UV, IR ou faisceau de ceux-ci et au moyen d'un deuxième rayon lumineux visible ou non, UV, IR ou faisceau de ceux-ci, **en ce qu'**on génère un mouvement relatif entre la pièce et lesdits premier et deuxième rayon lumineux visible ou non, UV, IR ou faisceau de ceux-ci, **en ce que** lors du mouvement relatif et de manière successive et décalée dans le temps, on prend pour ladite partie de la pièce illuminée, au moins deux images linéaires ou sensiblement linéaires ou matricielles ou sensiblement matricielles formées chacone d'au moins 25 points d'image ou pixels, de manière à obtenir, éventuellement après traitement, une première image développée correspondant au développement des points d'image ou pixels d'une première image linéaire ou sensiblement linéaire ou matricielle ou sensiblement matricielle éventuellement traitée et une deuxième image développée correspondant au développement des points d'image ou pixel d'une deuxième image linéaire ou sensiblement linéaire ou matricielle ou sensiblement matricielle éventuellement traitée.

8. Procédé suivant l'une des revendications 1 à 6. **caractérisé en ce qu'**on illumine la pièce au moyen d'un premier rayon lumineux visible ou non, UV, IR ou faisceau de ceux-ci et au moyen d'un deuxième rayon lumineux visible ou non, UV, IR ou faisceau de ceux-ci, **en ce qu'**on génère un mouvement relatif entre la pièce et lesdits premier et deuxieme rayon lumineux visible ou non, UV, IR ou faisceau de ceux-ci, de manière à ce qu'une partie de la pièce soit illuminée de manière successive et distincte, respectivement au moyen du premier rayon ou faisceau, et au moyen du deuxième rayon ou faisceau, **en ce que** lors du mouvement relatif et de manière successive et décalée dans le temps, on prend, pour la partie de la pièce en un endroit illuminé par le premier rayon ou faisceau, au moins une première image linéaire ou sensiblement linéaire ou matricielle ou sensiblement matricielle, et pour la partie de la pièce en un endroit illuminé par le deuxième rayon ou faisceau, au moins une deuxième image linéaire ou sensiblement linéaire ou matricielle ou sensiblement matricielle, de manière à obtenir, éventuellement après traitement, une première image développée correspondant au développement des points d'image ou pixels d'une première image linéaire ou sensiblement linéaire ou matricielle ou sensiblement matricielle éventuellement traitée de ladite partie illuminée par le premier rayon ou faisceau et une deuxième image développée correspondant au développement des points d'image ou pixel d'une deuxième image linéaire ou sensiblement linéaire ou matricielle ou sensiblement matricielle éventuellement traitée de ladite partie illuminée par le deuxième rayon ou faisceau.

9. Procédé suivant l'une des revendications 1 à 8, **caractérisé en ce que**, lors du mouvement relatif et de manière successive et décalée dans le temps, on prend, pour une partie de la pièce illuminée en mouvement relatif par rapport à des têtes de prise de vue, au moins une première image linéaire ou sensiblement linéaire correspondant à au moins une partie de l'intersection d'un premier plan avec la pièce et au moins une deuxième image linéaire ou sensiblement linéaire correspondant à au moins une partie de l'intersection d'un deuxième plan avec la pièce, lesdits premier et deuxième plans étant sécants entre eux, ou une image matricielle ou sensiblement matricielle correspondant sensiblement à deux images linéaires sécantes.

10. Procédé suivant l'une des revendications 1 à 8, **caractérisé en ce que** lors du mouvement relatif et de manière successive et décalée dans le temps, on prend pour une partie de la pièce illuminée, au moins une première image linéaire ou sensiblement linéaire correspondant à au moins une partie de l'intersection d'un premier plan avec la pièce et au moins une deuxième image linéaire ou sensiblement linéaire correspondant à au moins une partie de l'intersection d'un deuxième plan avec la pièce, la partie de l'intersection du premier plan avec la pièce et la partie de l'intersection du deuxième plan avec la pièce se coupant entre elles.

11. Procédé suivant l'une quelconque des revendications 1 à 10, **caractérisé en ce que** le mouvement relatif entre la pièce et les têtes de prise de vue est un mouvement de rotation, un mouvement de translation ou une combinaison d'un mouvement de rotation et d'un mouvement de translation.

12. Procédé suivant la revendication 11, **caractérisé en ce que** le mouvement relatif de rotation est un mouvement relatif d'au moins 45° de la pièce par rapport à des têtes de prise de vue.

13. Procédé suivant l'une quelconque des revendications précédentes, appliqué à des pièces présentant une irrégularité de surface sensiblement hélicoïdale, **caractérisé en ce qu'**on crée au moins un mouvement relatif de rotation entre la pièce et des têtes de prise de vue, **en ce que** lors du mouvement relatif et de manière successive et décalée dans le temps, on prend plusieurs images linéaires ou sensiblement linéaires ou matricielles ou sensiblement matricielles de la partie de pièce présentant ladite irrégularité, chaque image linéaire ou sensiblement linéaire correspondant à l'intersection d'un plan avec la partie de pièce, chaque plan desdites images, éventuellement après rotation autour de l'axe de rotation de la pièce, correspondant à un autre plan ou étant parallèle à un autre plan.

14. Procédé suivant la revendication 13, **caractérisé en ce que** chaque image linéaire ou sensiblement linéaire de ladite partie correspond à l'image de l'irrégularité hélicoïdale sur une hauteur égale ou inférieure au pas de l'hélice.

15. Procédé suivant l'une quelconque des revendications 1 à 13, **caractérisé en ce que** par rapport à un arrière-plan éventuellement illuminé par un ou plusieurs faisceaux lumineux visibles ou non, IR ou UV, incidents, on prend des images linéaires ou sensiblement linéaires ou matricielles ou sensiblement matricielles d'une partie illuminée de la pièce en mouvement relatif, et **en ce qu'**on modifie la couleur de l'arrière plan ou desdits rayons ou faisceaux électromagnétiques incidents, de sorte qu'au moins pour une partie du mouvement relatif de la pièce, on prend des images linéaires ou sensiblement linéaires ou matricielles ou sensiblement matricielles de la pièce avec un arrière plan ou rayons ou faisceaux incidents d'une première couleur et qu'au moins pour une autre partie du mouvement relatif de la pièce, on prend des images linéaires ou sensiblement linéaires ou matricielles ou sensiblement matricielles de la pièce avec un arrière plan ou rayons ou faisceaux incidents d'une couleur différente de la première.

16. Procède suivant l'une quelconque des revendications précédentes, **caractérisé en ce qu'**on prend des images linéaires ou sensiblement linéaires ou matricielles ou sensiblement matricielles d'une partie d'une pièce éclairée simultanément ou non, au moyen d'une illumination d'une première couleur, et au moyen d'une illumination d'une couleur différente de la première.

17. Procédé suivant l'une quelconque des revendications précédentes, **caractérisé en ce qu'**on prend plus de 10, de préférence plus de 20 images linéaires ou sensiblement linéaires ou matricielles ou sensiblement matricielles distinctes formées chacune d'au moins 50, de préférence d'au moins 80 points d'image ou pixels.

18. Dispositif pour la mise en oeuvre d'un procédé suivant l'une quelconque des revendications précédentes, sur un appareil comportant un châssis, un moyen destiné à porter une pièce et un moyen pour créer un mouvement relatif de la pièce par rapport à au moins une partie du châssis, ledit dispositif comprenant un moyen pour illuminer la pièce en mouvement relatif au une partie de celle-ci, un capteur de signaux provenant de la pièce, et un moyen de traitement des signaux pour déterminer une ou des glaçures, **caractérisé en ce que** le dispositif comprend :
- un moyen (17) pour illuminer la pièce (F) en mouvement relatif ou une partie de celle-ci au moyen d'au moins un rayon lumineux visible ou non IR nu UV ;
- plus de 5 têtes de prise de vue (14,15,16) choisies parmi le groupe constitué d'extrémités d'endoscope de prise d'images et des capteurs d'images déportés par rapport à un dispositif de traitement d'image, lesdites têtes prenant plusieurs images linéaires ou sensiblement linéaires ou matricielles ou sensiblement matricielles distinctes d'une ou de parties de la pièce (F) en mouvement relatif et illuminée,
- un moyen de traitement des images provenant des têtes de prise de vue via un dispositif de transfert de signal, pour obtenir, éventuellement après traitement desdites images linéaires ou sensiblement linéaires ou matricielles ou sensiblement matricielles, une série d'images développées correspondant chacune au développement, lors d'au moins une partie du mouvement relatif entre la pièce et des têtes de prise de vue, des points d'images ou pixels d'images décalées dans le temps, et
- un moyen de traitement (34) de la série d'images développées ou au moins d'une partie de celles-ci pour mettre en évidence une ou des glaçures dans la pièce.

19. Dispositif suivant la revendication 18, pour la détection de glaçures verticales d'une surface supérieure ou égale à 0,1 mm² avec un risque de non détection inférieure à 0,01%, **caractérisé en ce qu'**il comporte plus de 10 têtes de prise d' images linéaires ou sensiblement linéaires formées chacune d'au moins 50 points d'images ou pixels, les têtes de prise d'image étant choisies parmi le groupe constitué d'extrémités d'endoscopes de prise d'images et de capteurs d'images déportés par rapport au dispositif de traitement d'image, lesdites têtes étant reliées par un dispositif de transfert de signaux à un dispositif de traitement d'images.

20. Dispositif suivant la revendication 19, **caractérisé en ce que** le moyen de traitement (31,34) de la série d'images développées associe à chaque point d'image de celles-ci ou partie de celles-ci un niveau de gris ou de couleur et compare le niveau de gris ou de couleur de chaque point d'image au niveau de gris ou de couleur d'un point d'image d'une ou d'images de référence et/ou au niveau de gris ou de couleur d'un ou d'autres points d'image d'une image développée, de manière à déterminer une différence de niveau de gris ou de couleur correspondant à la présence d'une glaçure dans les parties de la pièce prises en image.

21. Dispositif suivant la revendication 20, **caractérisé en ce qu'**au moins pour une partie d'une image développée, le moyen de traitement (34) compare le niveau de gris ou de couleur de points d'image de ladite image développée au niveau de gris ou de couleur d'un ou d'autres points d'images de ladite image développée ou d'une autre image développée.

22. Dispositif suivant l'une des revendications 19 à 21, **caractérisé en ce qu'**il comporte deux têtes d'illuminations distinctes et différentes (17) émettant chacune un rayon ou faisceau lumineux visible ou non, IR ou UV, lesdites têtes étant agencées de manière à ce qu'une partie de la pièce soit illuminée successivement par le rayon ou faisceau lumineux visible ou non, UV, IR provenant de la première tête et par le rayon ou faisceau provenant de la deuxième tête, et **en ce que** les têtes de prise de vue sont agencées pour prendre une image de ladite partie de la pièce en un endroit illuminé par la première tête et en un endroit illuminé par la deuxième tête.

23. Dispositif suivant l'une quelconque des revendications 19 à 22, **caractérisé en ce qu'**il comporte un élément formant un arrière plan (AR) les têtes de prise de vue prenant des images linéaires ou sensiblement linéaires, ledit élément formant un arrière plan étant associé à un moyen pour modifier la couleur de celui-ci

24. Dispositif suivant l'une quelconque des revendications 19 à 23, **caractérisé en ce qu'**il comporte un moyen pour modifier la couleur de l'illumination des têtes d'illumination.

25. Dispositif suivant l'une quelconque des revendications 19 à 24, **caractérisé en ce qu'**il comporte un moyen pour identifier les glaçures, pour les classifier et pour les localiser sur les pièces.

26. Dispositif suivant l'une quelconque des revendications 19 à 25, **caractérisé en ce que** chaque tête de prise d'image est l'extrémité d'un endoscope de prise d'images, un dispositif de transfert de signaux transmettant l'image de la tête de prise d'images; et **en ce que** plusieurs endoscopes sont connectés à chaque capteur d'images matricielles ou linéaires, un dispositif de transfert de signaux analogiques ou digitaux transmettant les images du capteur au dispositif de traitement d'image par un dispositif de transfert de signaux analogiques ou digitaux.

27. Dispositif suivant la revendication 26, **caractérisé en ce qu'**il comporte plus de dix têtes de prise de vue connectées à un ou plusieurs capteurs d'images.

28. Dispositif suivant l'une quelconque des revendications 19 à 25, **caractérisé en ce que** chaque tête de prise d'image est :
- un capteur d'image du type caméra board, avec son objectif éventuel, un dispositif de transfert de signaux transmettant les images, via un centralisateur éventuel, au dispositif de traitement d'image, et/ou
- un capteur d'images déporté par rapport au dispositif de traitement d'image et relié au dispositif de traitement par un dispositif de transfert de signaux analogiques ou digitaux.

29. Dispositif suivant l'une quelconque des revendications 19 à 25, **caractérisé en ce que** chaque tête de prise d'image est un capteur d'image du type caméra board composé d'une caméra carte appelée aussi "board camera" ou de caméras à tête déportée.

## Claims

1. Method for detecting crizzling in pieces made from a translucent or transparent material, allowing at least a partial reflection of one or more electromagnetic rays in a direction crossing the material, in which a piece or part of pieces in relative movement in relation to the electromagnetic rays is illuminated by means of at least one ray or beam of light, visible or not, UV or IR, by means of several picture taking heads pictures are taken of the piece or parts of the piece illuminated in relative movement in relation to the picture taking heads, in which the pictures are processed to detect crizzling, this method being **characterised in that**:
- several distinct linear or substantially linear or matrix like or substantially matrix like pictures, each formed by at least 25 picture points or pixels, are taken staggered in time for parts of the neck or ring illuminated during at least a part of the relative movement between the piece and the picture taking heads by means of a series of more than five picture taking heads chosen from the group made up of the ends of picture taking endoscopes and picture sensors offset in relation to the picture processing device, these heads being connected by a signal transfer device to a picture processing device, so as to obtain a series of developed pictures, possibly after processing one or more pictures taken, each corresponding to the development of the picture points or pixels of at least 25 linear or substantially linear pictures of the piece staggered in time in relative movement or at least a series of at least four matrix like or substantially matrix like pictures staggered in time and
- the series of developed pictures or at least part of them is processed to show crizzling in the piece.

2. Method according to claim 1 for detecting vertical crizzling of a surface greater than or equal to 0.1 mm² with a risk of non-detection of less than 0.01%, **characterised in that** more than 10 linear or substantially linear pictures are taken, each formed by at least 50 picture points or pixels, by means of picture taking heads chosen from the group made up of the ends of picture taking endoscopes and picture sensors offset in relation to the picture processing device, these heads being connected by a signal transfer device to a picture processing device.

3. Method according to one of claims 1 and 2, **characterised in that** the piece or one or more parts of it is lit by means of a series of lighting heads, emitting rays or beams of light, UV rays or IR rays.

4. Method according to one of claims 1 to 3, **characterised in that** the series of developed pictures or at least part of them is processed to associate a level of grey or colour with each picture point of them and compare the level of grey or colour of each picture point with the level of grey or colour of a picture point of one or more reference pictures and/or the level of grey or colour of one or more other picture points of a developed picture, so as to determine a difference in the level of grey or colour corresponding to the presence of crizzling in the parts of the piece, of which a picture was taken.

5. Method according to claim 4, **characterised in that** the level of grey or colour of the picture points of a developed picture, advantageously of each picture point of a developed picture, is compared with the level of grey or colour of one or more other picture points of this developed picture and/or the level of grey or colour of one or more other picture points of another developed picture, possibly after processing, at least for a part of the series of developed pictures.

6. Method according to any one of claims 1 to 4, **characterised in that** several redundant linear or substantially linear or matrix like or substantially matrix like pictures, formed by at least 25 picture points or pixels, are taken for parts of the piece in relative movement by means of picture taking heads, so as to obtain a series of redundant developed pictures, possibly after processing, corresponding to at least two developed pictures, each corresponding to the development of the picture points or pixels of a linear or substantially linear or matrix like or substantially matrix like picture, possibly processed, for one and the same part of the piece in relative movement in relation to these picture taking heads.

7. Method according to one of claims 1 to 6, **characterised in that** a part of the piece is illuminated by means of a first ray or beam of light, visible or not, UV or IR, and by means of a second ray or beam of light, visible or not, UV or IR, a relative movement is generated between the piece and these first and second rays or beams of light, visible or not, UV or IR, during the relative movement successively staggered in time at least two linear or substantially linear or matrix like or substantially matrix like pictures, each formed by at least 25 picture points or pixels, are taken for this part of the piece illuminated so as to obtain, possibly after processing, a first developed picture corresponding to the development of the picture points or pixels of a first linear or substantially linear or matrix like or substantially matrix like picture, possibly processed, and a second developed picture corresponding to the development of the picture points or pixels of a second linear or substantially linear, matrix like or substantially matrix like picture, possibly processed.

8. Method according to one of claims 1 to 6, **characterised in that** the piece is illuminated by means of a first ray or beam of light, visible or not, UV or IR, and by means of a second ray or beam of light, visible or not, UV or IR, a relative movement is generated between the piece and these first and second rays or beams of light, visible or not, UV or IR, so that a part of the piece is illuminated successively and distinctly in respect of the means of the first ray or beam and by means of the second ray or beam, during the relative movement successively staggered in time at least a first linear or substantially linear or matrix like or substantially matrix like picture is taken for the part of the piece in a place illuminated by the first ray or beam and at least a second linear or substantially linear or matrix like or substantially matrix like picture is taken for the part of the piece in a place illuminated by the second ray or beam so as to obtain, possibly after processing, a first developed picture corresponding to the development of the picture points or pixels of a first linear or substantially linear or matrix like or substantially matrix like picture of this part illuminated by the first ray or beam, possibly processed, and a second developed picture corresponding to the development of the picture points or pixels of a second linear or substantially linear or matrix like or substantially matrix like picture of this part illuminated by the second ray or beam, possibly processed.

9. Method according to one of claims 1 to 8, **characterised in that** during the relative movement successively time staggered at least a first linear or substantially linear picture, corresponding to at least a part of the intersection of a first plane with the piece and at least a second linear or substantially linear picture, corresponding to at least a part of the intersection of a second plane with the piece, these first and second planes intersecting each other, or a matrix like or substantially matrix like picture, corresponding substantially to two intersecting linear pictures, is taken for a part of the piece illuminated in relative movement in relation to the picture taking heads.

10. Method according to one of claims 1 to 8, **characterised in that** during the relative movement successively time staggered at least a first linear or substantially linear picture, corresponding to at least a part of the intersection of a first plane with the piece, and at least a second linear or substantially linear picture, corresponding to at least a part of the intersection of a second plane with the piece, is taken for a part of the piece illuminated, the part of the intersection of the first plane with the piece and the part of the intersection of the second plane with the piece intersecting each other.

11. Method according to any one of claims 1 to 10, **characterised in that** the relative movement between the piece and the picture taking heads is a rotation movement, a translation movement or a combination of a rotation movement and a translation movement.

12. Method according to claim 11, **characterised in that** the relative rotation movement is a relative movement of at least 45° of the piece in relation to the picture taking heads.

13. Method according to any one of the previous claims, applied to pieces with a substantially helical surface irregularity, **characterised in that** at least one relative rotation movement is created between the piece and the picture taking heads, during the relative movement successively time staggered several linear or substantially linear or matrix like or substantially matrix like pictures are taken of the part of the piece with this irregularity, each linear or substantially linear picture corresponding to the intersection of a plane with the part of the piece, each plane of these pictures corresponding to another plane or being parallel to another plane, possibly after rotation around the rotation axis of the piece.

14. Method according to claim 13, **characterised in that** each linear or substantially linear picture of this part corresponds to the picture of the helical irregularity over a height equal to or less than the spiral pitch.

15. Method according to any one of claims 1 to 13, **characterised in that** linear or substantially linear or matrix like or substantially matrix like pictures are taken of an illuminated part of the piece in relative movement in relation to a background possibly illuminated by one or several beams of light, visible or not, IR or UV, the colour of the background or these impinging electromagnetic rays or beams is changed so that linear or substantially linear or matrix like or substantially matrix like pictures are taken with a background or impinging rays or beams of a first colour at least for a part of the relative movement of the piece and linear or substantially linear or matrix like or substantially matrix like pictures of the piece are taken with a background or impinging rays or beams of a different colour from the first at least for another part of the relative movement of the piece.

16. Method according to any one of the previous claims, **characterised in that** linear or substantially linear or matrix like or substantially matrix like pictures are taken of a part of a piece lit simultaneously or not by means of illumination with a first colour and by means of illumination with a different colour from the first.

17. Method according to any one of the previous claims, **characterised in that** more than 10, preferably more than 20 distinct linear or substantially linear or matrix like or substantially matrix like pictures are taken, each formed by at least 50, preferably at least 80 picture points or pixels.

18. Device for putting into operation a method according to any one of the previous claims on a device with a frame, a means for carrying a piece and a means of creating a relative movement of the piece in relation to at least a part of the frame, this device including a means of illuminating the piece in relative movement or part of it, a sensor for signals coming from the piece and a means of processing the signals to determine crizzling, **characterised in that** the device includes:
- a means (17) of illuminating the piece (F) in relative movement or a part of it by means of at least one ray of light, visible or not, IR or UV;
- more than 5 picture taking heads (14, 15, 16) chosen from the group made up of the ends of picture taking endoscopes and signal sensors offset in relation to a picture processing device, these heads taking several distinct linear or substantially linear or matrix like or substantially matrix like pictures of one or more parts of the piece (F) in relative movement which is illuminated,
- a means of processing the pictures coming from the picture taking heads via a signal transfer device to obtain a series of developed pictures, possibly after processing these linear or substantially linear or matrix like or substantially matrix like pictures, each corresponding to the development of the picture points or pixels of pictures staggered in time during at least a part of the relative movement between the piece and the picture taking heads and
- a means of processing (34) the series of developed pictures or at least a part of them to show crizzling in the part.

19. Device according to claim 18 for detecting vertical crizzling of a surface greater than or equal to 0.1 mm² with a risk of non-detection of less than 0.01%, **characterised in that** it has more than 10 heads for taking linear or substantially linear pictures, each formed by at least 50 picture points or pixels, the picture taking heads being chosen from the group made up of the ends of picture taking endoscopes and picture sensors offset in relation to the picture processing device, these heads being connected by a signal transfer device to a picture processing device.

20. Device according to claim 19, **characterised in that** the means of processing (31, 34) the series of developed pictures associates a level of grey or colour with each picture point of them or part of them and compares the level of grey or colour of each picture point with the level of grey or colour of a picture point of one or more reference pictures and/or the level of grey or colour of one or more other picture points of a developed picture, so as to determine a difference in the level of grey or colour corresponding to the presence of crizzling in the parts of the piece, of which the picture has been taken.

21. Device according to claim 20, **characterised in that** the means of processing (34) compares the level of grey or colour of the pictures points of this developed picture with the level of grey or colour of one or more other picture points of this developed picture or another developed picture at least for a part of a developed picture.

22. Device according to one of claims 19 to 21, **characterised in that** it has two distinct and different illuminating heads (17) each emitting a ray or beam of light, visible or not, IR or UV, these heads being arranged so that a part of the piece is illuminated successively by the ray or beam of light, visible or not, UV or IR, coming from the first head and by the ray or beam coming from the second head, the picture taking heads are arranged to take a picture of this part of the piece in a place illuminated by the first head and in a place illuminated by the second head.

23. Device according to any one of claims 19 to 22, **characterised in that** it has an element forming a background (AR), the picture taking heads taking linear or substantially linear pictures, this element forming a background being associated with a means of changing its colour.

24. Device according to any one of claims 19 to 23, **characterised in that** it has a means of changing the colour of illumination of the illuminating heads.

25. Device according to any one of claims 19 to 24, **characterised in that** it has a means of identifying crizzling, classifying it and locating it on the pieces.

26. Device according to any one of claims 19 to 25, **characterised in that** each picture taking head is the end of a picture taking endoscope, a signal transfer device transmitting the picture from the picture taking head, several endoscopes are connected to each sensor for matrix like or linear pictures, a transfer device for analogue or digital signals transmitting the pictures from the sensor to the picture processing device by a transfer device for analogue or digital signals.

27. Device according to claim 26, **characterised in that** it has more than ten picture taking heads connected to one or several picture sensors.

28. Device according to any one of claims 19 to 25, **characterised in that** each picture taking head is:
- a picture sensor of the board camera type, with its lens, if any, a signal transfer device transmitting the pictures via any centralising unit to the picture processing device and/or
- a picture sensor offset in relation to the picture processing device and connected to the processing device by a transfer device for analogue or digital signals.

29. Device according to any one of claims 19 to 25, **characterised in that** each picture taking head is a picture sensor of the board camera type made up of a card camera also called "board camera" or cameras with offset head.

## Patentansprüche

1. Verfahren zur Erfassung von Rissen in Proben, die aus einem durchscheinenden oder transparenten Material gefertigt sind, das mindestens eine teilweise Reflexion eines oder mehrerer elektromagnetischer Strahlen in einer Richtung ermöglicht, die das Material durchqueren, bei dem mittels mindestens eines Strahls von Licht im sichtbaren oder nicht sichtbaren Bereich, UV, IR oder Strahlbündel davon eine Probe oder ein Teil der Probe in Relativbewegung in Bezug auf die elektromagnetischen Strahlen bestrahlt wird, mittels mehrerer Bildaufnahmeköpfe Bilder der bestrahlten Probe oder Probenteile in Relativbewegung in Bezug auf die Bildaufnahmeköpfe aufgenommen werden, und bei dem die Bilder bearbeitet werden, um einen oder mehrere Risse zu erfassen, wobei das Verfahren **dadurch gekennzeichnet ist, dass**:
- bei mindestens einem Teil der Relativbewegung zwischen der Probe und den Bildaufnahmeköpfen, für bestrahlte Teile mit Engstelle oder Hülse, zeitversetzt mehrere lineare oder im Wesentlichen lineare oder matrixförmige oder im Wesentlichen matrixförmige Bilder aufgenommen werden, einzeln und gebildet von mindestens 25 Bildpunkten oder Pixeln, mittels einer Reihe von mehr als fünf Bildaufnahmeköpfen ausgewählt aus der Gruppe bestehend aus Enden von Bildaufnahmeendoskopen und Bildsensoren versetzt zur Bildbearbeitungsvorrichtung, wobei die Köpfe durch eine Signalübertragungsvorrichtung mit einer Bildverarbeitungsvorrichtung verbunden sind, derart, dass eventuell nach Bearbeitung eines oder mehrerer aufgenommener Bilder, eine Reihe von entwickelten Bildern erhalten werden, deren jedes der Entwicklung von Bildpunkten oder Pixeln von mindestens 25 linearen oder im Wesentlichen linearen zeitversetzten Bildern der Probe in Relativbewegung oder mindestens einer Reihe von mindestens vier matrixförmigen oder im Wesentlichen matrixförmigen zeitversetzten Bildern entspricht, und
- die Reihe von entwickelten Bildern oder mindestens ein Teil davon bearbeitet wird, um einen oder mehrere Risse in der Probe nachzuweisen.

2. Verfahren nach Anspruch 1, zur Erfassung von vertikalen Rissen in einer Oberfläche größer oder gleich 0,1 mm² mit einer Erfassungsgrenze unter 0,01 %, **dadurch gekennzeichnet, dass** mehr als 10 lineare oder im Wesentlichen lineare Bilder aufgenommen werden, deren jedes von mindestens 50 Bildpunkten oder Pixeln gebildet ist, mittels Bildaufnahmeköpfen ausgewählt aus der Gruppe bestehend aus Enden von Bildaufnahmeendoskopen und Bildsensoren versetzt zur Bildbearbeitungsvorrichtung, wobei die Köpfe durch eine Signalübertragungsvorrichtung mit einer Bildverarbeitungsvorrichtung verbunden sind.

3. Verfahren nach einem der Ansprüche 1 oder 2, **dadurch gekennzeichnet, dass** die Probe oder einer oder mehrere Teile davon mittels einer Reihe von Belichtungsköpfen belichtet werden, die Lichtstrahlen oder -bündel, UV-Strahlen oder IR-Strahlen emittieren.

4. Verfahren nach einem der Ansprüche 1 bis 3, **dadurch gekennzeichnet, dass** die Reihe von entwickelten Bildern oder mindestens ein Teil davon bearbeitet werden, um jedem Bildpunkt darin eine Graustufe oder Farbstufe zuzuordnen und um die Graustufe oder Farbstufe jedes Bildpunkts mit der Graustufe oder Farbstufe eines Bildpunkts eines oder mehrerer Referenzbilder und/oder der Graustufe oder Farbstufe eines oder mehrerer anderer Bildpunkte eines entwickelten Bildes zu vergleichen, derart, dass ein Unterschied der Graustufe oder Farbstufe entsprechend dem Vorhandensein eines Risses in den Teilen der im Bild aufgenommenen Probe bestimmt wird.

5. Verfahren nach Anspruch 4, **dadurch gekennzeichnet, dass** mindestens für einen Teil der Reihe von entwickelten Bildern die Graustufe oder Farbstufe von Bildpunkten eines entwickelten Bildes, mit Vorteil jedes Bildpunktes eines entwickelten Bildes, mit der Graustufe oder Farbstufe eines oder mehrerer Bildpunkte des entwickelten Bildes und/oder der Graustufe oder Farbstufe eines oder mehrerer Bildpunkte eines anderen entwickelten Bildes, eventuell nach Bearbeitung, verglichen wird.

6. Verfahren nach einem der Ansprüche 1 bis 4, **dadurch gekennzeichnet, dass** für Teile der Probe in Relativbewegung, mittels Aufnahmeköpfen mehrere lineare oder im Wesentlichen lineare oder matrixförmige oder im Wesentlichen matrixförmige Bilder aufgenommen werden, redundant und gebildet von mindestens 25 Bildpunkten oder Pixeln, derart, dass eventuell nach Bearbeitung, eine Reihe von entwickelten redundanten Bildern erhalten werden, die mindestens zwei entwickelten Bildern entsprechen, deren jedes einem selben Teil der Probe in Relativbewegung in Bezug auf die Aufnahmeköpfe bei Entwicklung der Bildpunkte oder Pixel eines linearen oder im Wesentlichen linearen oder matrixförmigen oder im Wesentlichen matrixförmigen Bildes, eventuell bearbeitet, entspricht.

7. Verfahren nach einem der Ansprüche 1 bis 6, **dadurch gekennzeichnet, dass** ein Teil der Probe mit einem ersten Strahl von Licht im sichtbaren oder nicht sichtbaren Bereich, UV, IR oder Strahlbündel davon und mit einem zweiten Strahl von Licht im sichtbaren oder nicht sichtbaren Bereich, UV, IR oder Strahlbündel davon bestrahlt wird, dass eine Relativbewegung zwischen der Probe und dem ersten und zweiten Strahl von Licht im sichtbaren oder nicht sichtbaren Bereich, UV, IR oder Strahlbündel davon erzeugt wird, dass bei der Relativbewegung und nacheinander und zeitversetzt für den Teil der bestrahlten Probe mindestens zwei lineare oder im Wesentlichen lineare oder matrixförmige oder im Wesentlichen matrixförmige Bilder aufgenommen werden, deren jedes aus mindestens 25 Bildpunkten oder Pixeln gebildet ist, derart, dass eventuell nach Bearbeitung, ein erstes entwickeltes Bild erhalten wird, das bei Entwicklung Bildpunkten oder Pixeln eines ersten linearen oder im Wesentlichen linearen oder matrixförmigen oder im Wesentlichen matrixförmigen Bildes, eventuell bearbeitet, entspricht und ein zweites entwickeltes Bild, das bei Entwicklung Bildpunkten oder Pixeln eines zweiten linearen oder im Wesentlichen linearen oder matrixförmigen oder im Wesentlichen matrixförmigen Bildes, eventuell bearbeitet, entspricht.

8. Verfahren nach einem der Ansprüche 1 bis 6, **dadurch gekennzeichnet, dass** die Probe mit einem ersten Strahl von Licht im sichtbaren oder nicht sichtbaren Bereich, UV, IR oder Strahlbündel davon und mit einem zweiten Strahl von Licht im sichtbaren oder nicht sichtbaren Bereich, UV, IR oder Strahlbündel davon bestrahlt wird, dass eine Relativbewegung zwischen der Probe und dem ersten und zweiten Strahl von Licht im sichtbaren oder nicht sichtbaren Bereich, UV, IR oder Strahlbündel davon erzeugt wird, derart, dass ein Teil der Probe nacheinander und einzeln bestrahlt wird, jeweils mittels des ersten Strahls oder Bündels und mittels des zweiten Strahls oder Bündels, **dadurch**, dass bei der Relativbewegung und nacheinander und zeitversetzt, für den Teil der Probe an einer vom ersten Strahl oder Bündel bestrahlten Stelle mindestens ein erstes lineares oder im Wesentlichen lineares oder matrixförmiges oder im Wesentlichen matrixförmiges Bild aufgenommen wird, und für den Teil der Probe an einer vom zweiten Strahl oder Bündel bestrahlten Stelle mindestens ein zweites lineares oder im Wesentlichen lineares oder matrixförmiges oder im Wesentlichen matrixförmiges Bild aufgenommen wird, derart, dass eventuell nach Bearbeitung, ein erstes entwickeltes Bild erhalten wird, das bei Entwicklung Bildpunkten oder Pixeln eines ersten linearen oder im Wesentlichen linearen oder matrixförmigen oder im Wesentlichen matrixförmigen Bildes, eventuell bearbeitet, des vom ersten Strahl oder Bündel bestrahlten Teils entspricht, und ein zweites entwickeltes Bild, das bei Entwicklung Bildpunkten oder Pixeln eines zweiten linearen oder im Wesentlichen linearen oder matrixförmigen oder im Wesentlichen matrixförmigen Bildes, eventuell bearbeitet, des vom zweiten Strahl oder Bündel bestrahlten Teils entspricht.

9. Verfahren nach einem der Ansprüche 1 bis 8, **dadurch gekennzeichnet, dass** bei der Relativbewegung und nacheinander und zeitversetzt, für einen Teil der bestrahlten Probe in Relativbewegung in Bezug auf Aufnahmeköpfe mindestens ein erstes lineares oder im Wesentlichen lineares Bild aufgenommen wird, das mindestens einem Teil des Schnittbereichs einer ersten Ebene mit der Probe entspricht, und mindestens ein zweites lineares oder im Wesentlichen lineares Bild, das mindestens einem Teil des Schnittbereichs einer zweiten Ebene mit der Probe entspricht, wobei die erste und zweite Ebene sich schneiden, oder ein matrixförmiges oder im Wesentlichen matrixförmiges Bild, das im Wesentlichen zwei linearen sich schneidenden Bildern entspricht.

10. Verfahren nach einem der Ansprüche 1 bis 8, **dadurch gekennzeichnet, dass** bei der Relativbewegung und nacheinander und zeitversetzt, für einen Teil der bestrahlten Probe mindestens ein erstes lineares oder im Wesentlichen lineares Bild aufgenommen wird, das mindestens einem Teil des Schnittbereichs einer ersten Ebene mit der Probe entspricht, und mindestens ein zweites lineares oder im Wesentlichen lineares Bild, das mindestens einem Teil des Schnittbereichs einer zweiten Ebene mit der Probe entspricht, wobei der Teil des Schnittbereichs der ersten Ebene mit der Probe und der Teil des Schnittbereichs der zweiten Ebene mit der Probe einander schneiden.

11. Verfahren nach einem der Ansprüche 1 bis 10, **dadurch gekennzeichnet, dass** die Relativbewegung zwischen der Probe und den Aufnahmeköpfen eine Rotationsbewegung, eine Translationsbewegung oder eine Kombination einer Rotationsbewegung und einer Translationsbewegung ist.

12. Verfahren nach Anspruch 11, **dadurch gekennzeichnet, dass** die Rotationsrelativbewegung eine Relativbewegung von mindestens 45° der Probe in Bezug auf die Aufnahmeköpfe ist.

13. Verfahren nach einem der vorhergehenden Ansprüche, angewendet auf Proben, die eine im Wesentlichen spiralförmige Oberflächenunregelmäßigkeit aufweisen, **dadurch gekennzeichnet, dass** mindestens eine Rotationsrelativbewegung zwischen der Probe und Aufnahmeköpfen ausgebildet wird, dass bei der Relativbewegung und nacheinander und zeitversetzt mehrere lineare oder im Wesentlichen lineare oder matrixförmige oder im Wesentlichen matrixförmige Bilder des Teils der Probe aufgenommen werden, der die Unregelmäßigkeit aufweist, wobei jedes lineare oder im Wesentlichen lineare Bild einem Schnittbereich einer Ebene mit dem Teil der Probe entspricht, wobei jede Ebene der Bilder, eventuell nach Rotation um die Rotationsachse der Probe, einer anderen Ebene entspricht oder zu einer anderen Ebene parallel ist.

14. Verfahren nach Anspruch 13, **dadurch gekennzeichnet, dass** jedes lineare oder im Wesentlichen lineare Bild des Teils dem Bild der spiralförmigen Unregelmäßigkeit auf einer Höhe gleich oder kleiner dem Gang der Spirale entspricht.

15. Verfahren nach einem der Ansprüche 1 bis 13, **dadurch gekennzeichnet, dass** in Bezug auf einen Hintergrund, der eventuell von einem oder mehreren einfallenden Bündeln von Licht im sichtbaren oder nicht sichtbaren Bereich, IR oder UV bestrahlt wird, lineare oder im Wesentlichen lineare oder matrixförmige oder im Wesentlichen matrixförmige Bilder eines bestrahlten Teils der Probe in Relativbewegung aufgenommen werden und **dadurch**, dass die Farbe des Hintergrunds oder der einfallenden elektromagnetischen Strahlen oder Bündel verändert wird, derart, dass mindestens für einen Teil der Relativbewegung der Probe lineare oder im Wesentlichen lineare oder matrixförmige oder im Wesentlichen matrixförmige Bilder der Probe mit einem Hintergrund oder einfallenden Strahlen oder Bündeln in einer ersten Farbe aufgenommen werden und **dadurch**, dass mindestens für einen weiteren Teil der Relativbewegung der Probe lineare oder im Wesentlichen lineare oder matrixförmige oder im Wesentlichen matrixförmige Bilder der Probe mit einem Hintergrund oder einfallenden Strahlen oder Bündeln in einer anderen Farbe als die erste aufgenommen werden.

16. Verfahren nach einem der vorhergehenden Ansprüche, **dadurch gekennzeichnet, dass** lineare oder im Wesentlichen lineare oder matrixförmige oder im Wesentlichen matrixförmige Bilder eines Teils einer Probe aufgenommen werden, die gleichzeitig oder nicht gleichzeitig, mittels einer Beleuchtung in einer ersten Farbe und mittels einer Beleuchtung in einer anderen Farbe als die erste belichtet wird.

17. Verfahren nach einem der vorhergehenden Ansprüche, **dadurch gekennzeichnet, dass** mehr als 10, bevorzugt mehr als 20 lineare oder im Wesentlichen lineare oder matrixförmige oder im Wesentlichen matrixförmige einzelne Bilder aufgenommen werden, deren jedes von mindestens 50, bevorzugt mindestens 80 Bildpunkten oder Pixeln gebildet ist.

18. Vorrichtung zur Anwendung eines Verfahrens nach einem der vorhergehenden Ansprüche bei einem Gerät, das einen Rahmen, ein Mittel zum Halten einer Probe und ein Mittel zum Ausbilden einer Relativbewegung der Probe in Bezug auf mindestens einen Teil des Rahmens umfasst, wobei die Vorrichtung umfasst: ein Mittel zum Bestrahlen der Probe in Relativbewegung oder eines Teils derselben, einen Sensor für Signale von der Probe und ein Mittel zur Bearbeitung von Signalen zur Bestimmung eines oder mehrerer Risse, **dadurch gekennzeichnet, dass** die Vorrichtung umfasst:
- ein Mittel (17) zum Bestrahlen der Probe (F) in Relativbewegung oder eines Teils derselben mittels mindestens eines Strahls von Licht im sichtbaren oder nicht sichtbaren Bereich, IR oder UV;
- mehr als 5 Aufnahmeköpfe (14, 15, 16) ausgewählt aus der Gruppe bestehend aus Enden von Bildaufnahmeendoskopen und Bildsensoren versetzt zu einer Bildbearbeitungsvorrichtung, wobei die Köpfe mehrere lineare oder im Wesentlichen lineare oder matrixförmige oder im Wesentlichen matrixförmige einzelne Bilder von einem oder mehreren Teilen der Probe (F) in Relativbewegung und bei Bestrahlung aufnehmen,
- ein Mittel zur Bearbeitung von Bildern, die von Aufnahmeköpfen über eine Vorrichtung zur Signalübertragung kommen, um eventuell nach Bearbeitung der linearen oder im Wesentlichen linearen oder matrixförmigen oder im Wesentlichen matrixförmigen Bilder, eine Reihe von entwickelten Bildern zu erhalten, deren jedes bei Einwicklung, bei mindestens einem Teil der Relativbewegung zwischen der Probe und den Aufnahmeköpfen, Bildpunkten oder Pixeln von zeitversetzten Bildern entsprechen, und
- ein Mittel zur Bearbeitung (34) der Reihe von entwickelten Bildern oder mindestens eines Teils derselben, um einen oder mehrere Risse in der Probe nachzuweisen.

19. Vorrichtung nach Anspruch 18, zum Erfassen von vertikalen Rissen in einer Oberfläche größer oder gleich 0,1 mm² mit einer Erfassungsgrenze unter 0,01 %, **dadurch gekennzeichnet, dass** sie mehr als 10 Aufnahmeköpfe für lineare oder im Wesentlichen lineare Bilder umfasst, deren jedes von mindestens 50 Bildpunkten oder Pixeln gebildet ist, wobei die Bildaufnahmeköpfe ausgewählt sind aus der Gruppe bestehend aus Enden von Bildaufnahmeendoskopen und Bildsensoren versetzt zur Bildbearbeitungsvorrichtung, wobei die Köpfe durch eine Signalübertragungsvorrichtung mit einer Bildverarbeitungsvorrichtung verbunden sind.

20. Vorrichtung nach Anspruch 19, **dadurch gekennzeichnet, dass** das Bearbeitungsmittel (31, 34) der Reihe von entwickelten Bildern jedem Bildpunkt davon oder Teil davon eine Graustufe oder Farbstufe zuordnet und die Graustufe oder Farbstufe jedes Bildpunkts mit der Graustufe oder Farbstufe eines Bildpunktes eines oder mehrerer Referenzbilder und/oder der Graustufe oder Farbstufe eines oder mehrerer Bildpunkte eines entwickelten Bildes vergleicht, derart, dass ein Unterschied der Graustufe oder Farbstufe entsprechend dem Vorhandensein eines Risses in den Teilen der im Bild aufgenommenen Probe bestimmt wird.

21. Vorrichtung nach Anspruch 20, **dadurch gekennzeichnet, dass** mindestens für einen Teil eines entwickelten Bildes, das Bearbeitungsmittel (34) die Graustufe oder Farbstufe von Bildpunkten des entwickelten Bildes mit der Graustufe oder Farbstufe eines oder mehrerer anderer Bildpunkte des entwickelten Bildes oder eines anderen entwickelten Bildes vergleicht.

22. Vorrichtung nach einem der Ansprüche 19 bis 21, **dadurch gekennzeichnet, dass** es zwei einzelne und unterschiedliche Bestrahlungsköpfe (17) umfasst, deren jeder einen Strahl oder Bündel von Licht im sichtbaren oder nicht sichtbaren Bereich, IR oder UV emittiert, wobei die Köpfe derart angeordnet sind, dass ein Teil der Probe nacheinander vom Strahl oder Bündel von Licht im sichtbaren oder nicht sichtbaren Bereich, UV, IR, der (das) vom ersten Kopf kommt und vom Strahl oder Bündel, der (das) vom zweiten Kopf kommt bestrahlt wird, und **dadurch**, dass die Aufnahmeköpfe so angeordnet sind, dass sie ein Bild des Teils der Probe an einer vom ersten Kopf bestrahlten Stelle und an einer vom zweiten Kopf bestrahlten Stelle aufnehmen.

23. Vorrichtung nach einem der Ansprüche 19 bis 22, **dadurch gekennzeichnet, dass** sie ein Element umfasst, das einen Hintergrund (AR) bildet, die Aufnahmeköpfe lineare oder im Wesentlichen lineare Bilder aufnehmen, wobei dem den Hintergrund bildenden Element ein Mittel zum Verändern seiner Farbe zugeordnet ist.

24. Vorrichtung nach einem der Ansprüche 19 bis 23, **dadurch gekennzeichnet, dass** sie ein Mittel zum Verändern der Farbe der Bestrahlung der Bestrahlungsköpfe umfasst.

25. Vorrichtung nach einem der Ansprüche 19 bis 24, **dadurch gekennzeichnet, dass** sie ein Mittel zum Identifizieren von Rissen, zu ihrer Klassifizierung und ihrer Lokalisierung auf den Proben umfasst.

26. Vorrichtung nach einem der Ansprüche 19 bis 25, **dadurch gekennzeichnet, dass** jeder Bildaufnahmekopf das Ende eines Bildaufnahmeendoskops ist, eine Signalübertragungsvorrichtung, die das Bild des Bildaufnahmekopfes überträgt und **dadurch**, dass mehrere Endoskope mit jedem Sensor für matrixförmige oder lineare Bilder verbunden sind, eine Übertragungsvorrichtung für analoge oder digitale Signale, die Bilder vom Sensor zur Bildbearbeitungsvorrichtung über eine Übertragungsvorrichtung für analoge oder digitale Signale überträgt.

27. Vorrichtung nach Anspruch 26, **dadurch gekennzeichnet, dass** sie mehr als zehn Aufnahmeköpfe umfasst, die mit einem oder mehreren Bildsensoren verbunden sind.

28. Vorrichtung nach einem der Ansprüche 19 bis 25, **dadurch gekennzeichnet, dass** jeder Bildaufnahmekopf ist:
- ein Bildsensor vom Typ Bordkamera, mit seinem eventuellen Objektiv, eine Signalübertragungsvorrichtung zum Übertragen von Bildern, über eine eventuelle Zentralstelle, an eine Bildbearbeitungsvorrichtung und/oder
- ein Bildsensor versetzt zur Bildbearbeitungsvorrichtung und verknüpft mit der Bearbeitungsvorrichtung durch eine Übertragungsvorrichtung für analoge oder digitale Signale.

29. Vorrichtung nach einem der Ansprüche 19 bis 25, **dadurch gekennzeichnet, dass** jeder Bildaufnahmekopf ein Bildsensor vom Typ Bordkamera ist, gebildet aus einer Kamerakarte auch "board camera" genannt, oder Kameras mit versetztem Kopf.
